# EUROPEAN PATENT APPLICATION

(11) **EP 4 843 716 A1**
(43) Date of publication of application: **25.11.2026**
(21) Application number: 25897940.0
(22) Date of filing: 09.06.2025
(51) Int. Cl.: B25J 15/06, B23Q 7/04, B25J 9/06, B65H 5/14

(54) **WORKPIECE CONVEYANCE HAND, WORKPIECE CONVEYANCE DEVICE, AND LASER PROCESSING SYSTEM**

(30) Priority: 27.11.2024 JP 2024206631
(71) Applicant: Yamazaki Mazak Corporation, Niwa-gun, Aichi 480-0197 (JP)
(72) Inventor: SAWADA, Yosuke, Niwa-gun, Aichi 480-0197 (JP); TAMURA, Yoji, Niwa-gun, Aichi 480-0197 (JP); SAKAI, Yoshihiko, Niwa-gun, Aichi 480-0197 (JP); KAWAGUCHI, Koji, Niwa-gun, Aichi 480-0197 (JP); MASHIO, Kairi, Nonoichi-shi, Ishikawa 921-8809 (JP)
(74) Representative: TBK
(86) International application number: PCT/JP2025/020782
(87) International publication number: WO 2026/115772

(57) **Abstract**

A workpiece transfer hand workpiece transfer hand includes a plurality of attachments and a plate. The plurality of attachments include a first attachment and a second attachment. The first attachment is capable of attracting a workpiece. The second attachment is capable of attracting the workpiece. To the plate, each of the plurality of attachments is attached by magnetic force. The first attachment includes a first electromagnet and a second electromagnet. The first electromagnet includes a first surface coming into contact with the workpiece and capable of attracting the workpiece. The second electromagnet includes a second surface coming into contact with the plate and capable of attracting the plate. The first electromagnet is tiltable with respect to the second electromagnet.

## Description

### Technical Field

The present invention relates to a workpiece transfer hand, a workpiece transfer device, and a laser beam machining system.

### Background Art

Apparatuses for conveying workpieces have been known.

Example related techniques include a robot hand disclosed in Patent Literature 1. The robot hand described in Patent Literature 1 includes a hand part having an elongated hole formed, and a plurality of vacuum pads. The position of each of the vacuum pads can be changed along the elongated hole.

### Citation List

### Patent Literature

PTL1: CD-ROM of Japanese Utility Model Application No. 4-22737 (published as Japanese Unexamined Utility Model Application Publication No. 5-80689).

### Summary of Invention

### Technical Problem

An object of the present invention is to provide a workpiece transfer hand, a workpiece transfer device, and a laser beam machining system including attachments enabling a workpiece to be more reliably attracted.

### Solution to Problem

Embodiments of the present invention relate to a workpiece transfer hand, a workpiece transfer device, and a laser beam machining system described below.
(1) A workpiece transfer hand includes a plurality of attachments and a plate. The plurality of attachments include a first attachment and a second attachment. The first attachment is capable of attracting a workpiece. The second attachment is capable of attracting the workpiece. To the plate, each of the plurality of attachments is attached by magnetic force. The first attachment includes a first electromagnet and a second electromagnet. The first electromagnet includes a first surface coming into contact with the workpiece and capable of attracting the workpiece. The second electromagnet includes a second surface coming into contact with the plate and capable of attracting the plate. The first electromagnet is tiltable with respect to the second electromagnet.
(2) A workpiece transfer device includes a workpiece transfer hand and a hand traveling device configured to move the workpiece transfer hand. The workpiece transfer hand includes a plurality of attachments and a plate. The plurality of attachments include a first attachment and a second attachment. The first attachment is capable of attracting a workpiece. The second attachment is capable of attracting the workpiece. To the plate, each of the plurality of attachments is attached by magnetic force. The first attachment includes a first electromagnet and a second electromagnet. The first electromagnet includes a first surface coming into contact with the workpiece and capable of attracting the workpiece. The second electromagnet includes a second surface coming into contact with the plate and capable of attracting the plate. The first electromagnet is tiltable with respect to the second electromagnet.
(3) A laser beam machining system includes a laser beam machining apparatus and a workpiece transfer device. The laser beam machining apparatus is configured to irradiate a raw material workpiece with a laser beam to form a plurality of workpieces including a first workpiece and a second workpiece from the raw material workpiece. The workpiece transfer device is configured to convey the plurality of workpieces. The workpiece transfer device includes a workpiece transfer hand and a hand traveling device configured to move the workpiece transfer hand. The workpiece transfer hand includes a plurality of attachments and a plate. The plurality of attachments include a first attachment and a second attachment. The first attachment is capable of attracting the first workpiece. The second attachment is capable of attracting the first workpiece. To the plate, each of the plurality of attachments is attached by magnetic force. The first attachment includes a first electromagnet and a second electromagnet. The first electromagnet includes a first surface coming into contact with the first workpiece and is capable of attracting the first workpiece. The second electromagnet includes a second surface coming into contact with the plate and capable of attracting the plate. The first electromagnet is tiltable with respect to the second electromagnet.

### Effects of Invention

The present invention can provide a workpiece transfer hand, a workpiece transfer device, and a laser beam machining system including attachments enabling a workpiece to be more reliably attracted.

### Brief Description of Drawings

[FIG. 1] FIG. 1 is a schematic perspective view illustrating a state where a workpiece is attracted by a plurality of attachments.
[FIG. 2] FIG. 2 is a schematic perspective view illustrating how each of the plurality of attachments is attachable to and detachable from a plate.
[FIG. 3] FIG. 3 is a schematic side view schematically illustrating a state before the workpiece is attracted by the plurality of attachments.
[FIG. 4] FIG. 4 is a schematic side view schematically illustrating a state where the workpiece is attracted by the plurality of attachments.
[FIG. 5] FIG. 5 is a schematic perspective view illustrating how the layout of the plurality of attachments is changed.
[FIG. 6] FIG. 6 is a schematic perspective view illustrating how the layout of the plurality of attachments is changed.
[FIG. 7] FIG. 7 is a schematic perspective view illustrating how the layout of the plurality of attachments is changed.
[FIG. 8] FIG. 8 is a schematic perspective view illustrating how the layout of the plurality of attachments is changed.
[FIG. 9] FIG. 9 is a schematic perspective view illustrating how the layout of the plurality of attachments is changed.
[FIG. 10] FIG. 10 is a schematic perspective view illustrating how the layout of the plurality of attachments is changed.
[FIG. 11] FIG. 11 is a schematic perspective view illustrating a state where a second workpiece is attracted by the plurality of attachments disposed in a second layout.
[FIG. 12] FIG. 12 is a schematic side view schematically illustrating a workpiece transfer hand according to embodiment 1.
[FIG. 13] FIG. 13 is a schematic perspective view illustrating a state where a pipe workpiece is attracted by the plurality of attachments disposed in the second layout.
[FIG. 14] FIG. 14 is a schematic perspective view illustrating a workpiece transfer device according to embodiment 1.
[FIG. 15] FIG. 15 is a schematic perspective view illustrating the workpiece transfer device according to embodiment 1.
[FIG. 16] FIG. 16 is a schematic perspective view illustrating a workpiece transfer hand according to embodiment 2.
[FIG. 17] FIG. 17 is a schematic cross-sectional view illustrating a state before a workpiece is attracted by a first attachment.
[FIG. 18] FIG. 18 is a schematic cross-sectional view illustrating a state after the workpiece is attracted by the first attachment
[FIG. 19] FIG. 19 is an exploded cross-sectional view of the first attachment.
[FIG. 20] FIG. 20 is an exploded perspective view of the first attachment.
[FIG. 21] FIG. 21 is a schematic cross-sectional view illustrating a state before a workpiece is attracted by a first attachment according to a modification.
[FIG. 22] FIG. 22 is a schematic cross-sectional view illustrating a state after the workpiece is attracted by the first attachment according to the modification.
[FIG. 23] FIG. 23 is an exploded perspective view of the first attachment according to the modification.
[FIG. 24] FIG. 24 is an enlarged view of a region surrounded by a one-dot-chain line circle A1 in FIG. 17.
[FIG. 25] FIG. 25 is a schematic cross-sectional view illustrating how a first shaft component is movable relative to a first hole part.
[FIG. 26] FIG. 26 is a schematic cross-sectional view illustrating a state before a workpiece is attracted by the first attachment and the second attachment.
[FIG. 27] FIG. 27 is a schematic cross-sectional view illustrating a state after the workpiece is attracted by the first attachment and the second attachment.
[FIG. 28] FIG. 28 is a schematic cross-sectional view illustrating a state before a workpiece is attracted by a second attachment according to a modification.
[FIG. 29] FIG. 29 is an enlarged view of a region surrounded by a one-dot-chain line circle A2 in FIG. 27.
[FIG. 30] FIG. 30 is a schematic perspective view illustrating a part of the workpiece transfer hand according to embodiment 2.
[FIG. 31] FIG. 31 is a schematic side view schematically illustrating the workpiece transfer hand according to embodiment 2.
[FIG. 32] FIG. 32 is a schematic perspective view illustrating how each of the plurality of attachments is attachable to and detachable from the plate.
[FIG. 33] FIG. 33 is a schematic perspective view illustrating the workpiece transfer hand according to embodiment 2.
[FIG. 34] FIG. 34 is a schematic perspective view illustrating the workpiece transfer hand according to embodiment 2.
[FIG. 35] FIG. 35 is a schematic perspective view illustrating a part of a workpiece transfer device according to embodiment 2.
[FIG. 36] FIG. 36 is a schematic perspective view illustrating the workpiece transfer device according to embodiment 2.
[FIG. 37] FIG. 37 is a schematic bottom view schematically illustrating a part of the workpiece transfer hand according to embodiment 2.
[FIG. 38] FIG. 38 is a schematic side view schematically illustrating a state where a small workpiece is attracted by a movable electromagnet.
[FIG. 39] FIG. 39 is a schematic perspective view illustrating an example of a workpiece.
[FIG. 40] FIG. 40 is a diagram schematically illustrating how a controller can control a plurality of control target devices.
[FIG. 41] FIG. 41 is a schematic perspective view illustrating how a first position change mode is executed.
[FIG. 42] FIG. 42 is a schematic perspective view illustrating how a second position change mode is executed.
[FIG. 43] FIG. 43 is a schematic plan view schematically illustrating how a plurality of workpieces are sorted into a plurality of groups.
[FIG. 44] FIG. 44 is a schematic plan view schematically illustrating how a sorting mode is executed.
[FIG. 45] FIG. 45 is a schematic plan view schematically illustrating how the sorting mode is executed.
[FIG. 46] FIG. 46 is a schematic plan view schematically illustrating how the sorting mode is executed.
[FIG. 47] FIG. 47 is a schematic plan view schematically illustrating how the sorting mode is executed.
[FIG. 48] FIG. 48 is a schematic plan view schematically illustrating how the sorting mode is executed.
[FIG. 49] FIG. 49 is a schematic side view schematically illustrating a laser beam machining system according to embodiment 3.
[FIG. 50] FIG. 50 is a schematic perspective view illustrating a part of the laser beam machining system according to embodiment 3.

### Description of embodiments

A workpiece transfer hand 1, a workpiece transfer device 10, and a laser beam machining system 100 according to embodiments will now be described with reference to the accompanying drawings. In the description of the embodiments, portions and components having the same functions are denoted by the same reference numerals, and the redundant description on the portions and the components denoted by the same reference numerals will be omitted.

### (Definition of Terms)

In this specification, of a plurality of surfaces of a plate 3, the surface to which a plurality of attachments 2 are attached is defined as an attachment mounting surface 31a. Of the plurality of surfaces of the plate 3, the surface located on the opposite side of the attachment mounting surface 31a is defined as a back surface 33.

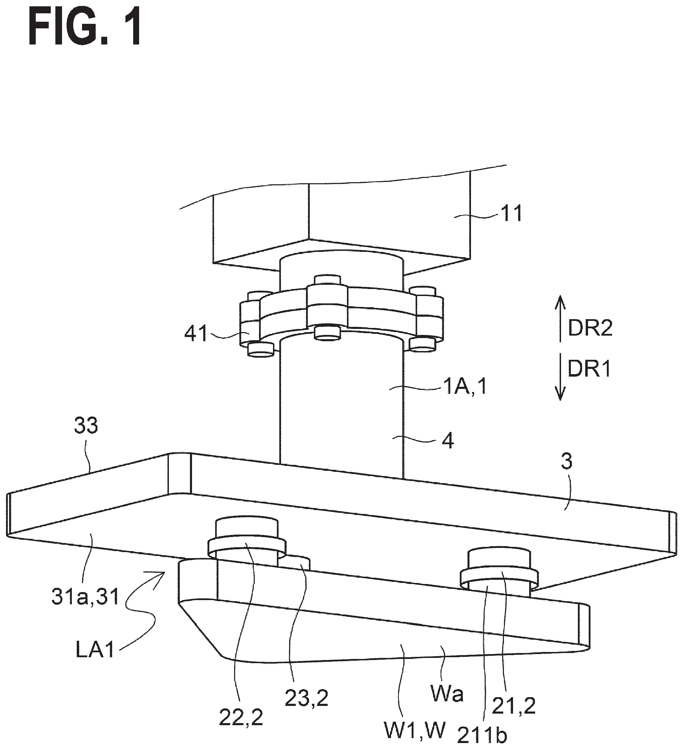

In this specification, a direction from a plate supporter 4 that supports the plate 3 toward the plate 3 is defined as a first direction DR1. A direction opposite to the first direction DR1 is defined as a second direction DR2. In the example illustrated in FIG. 1, a direction from the back surface 33 toward the attachment mounting surface 31a is the first direction DR1. The direction from the attachment mounting surface 31a toward the back surface 33 is the second direction DR2.

### (Embodiment 1)

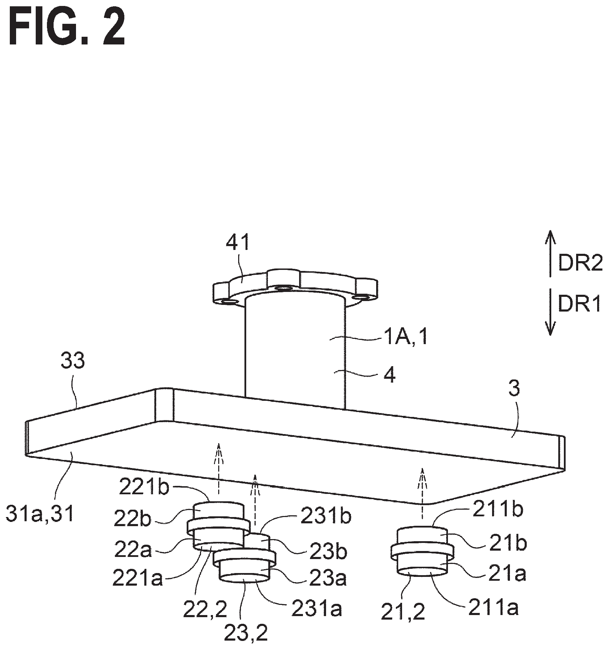

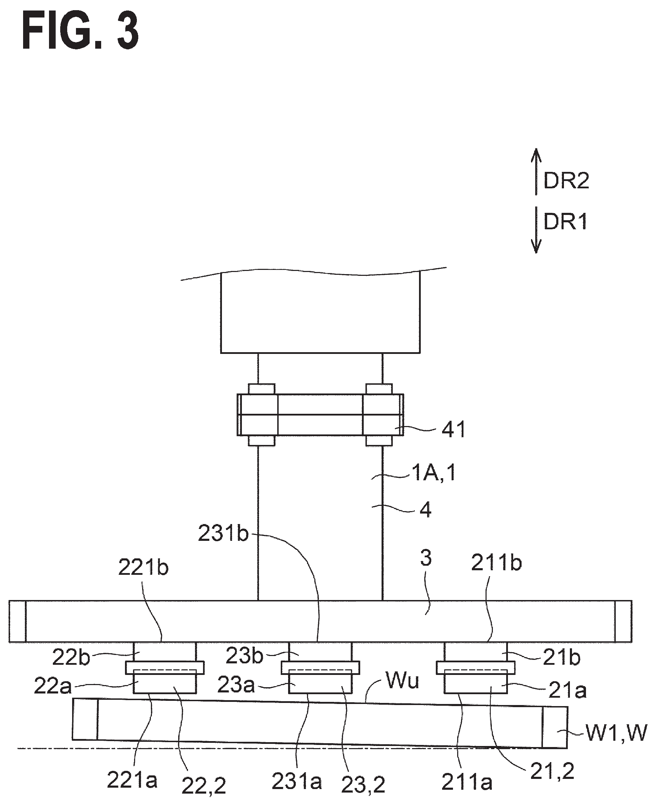

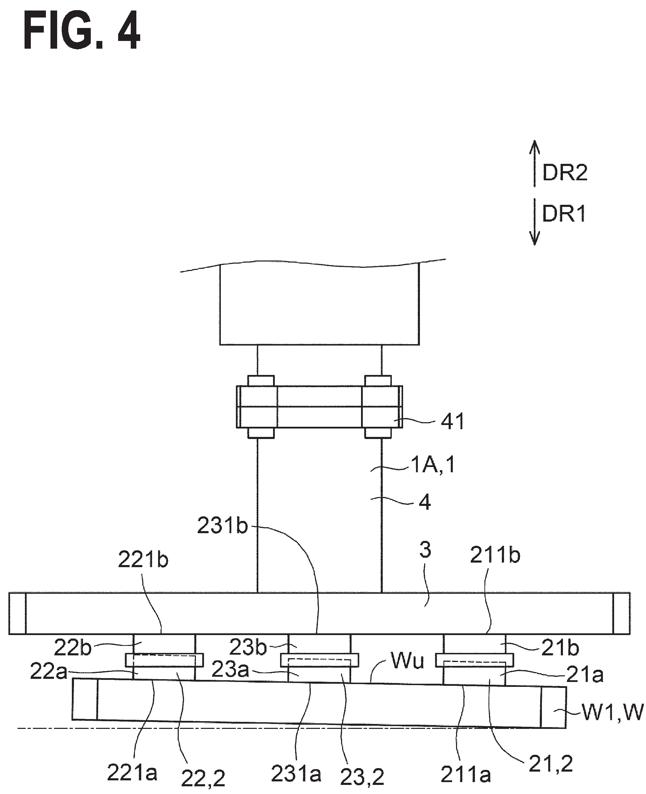

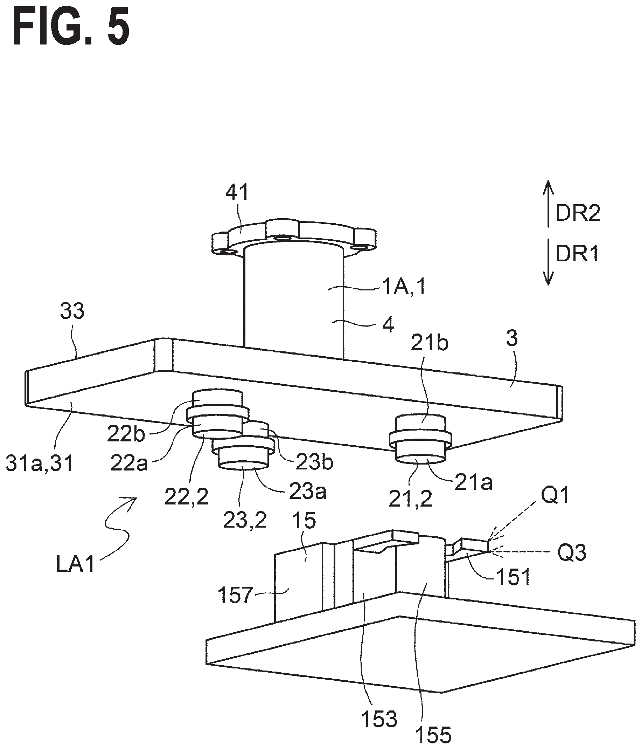

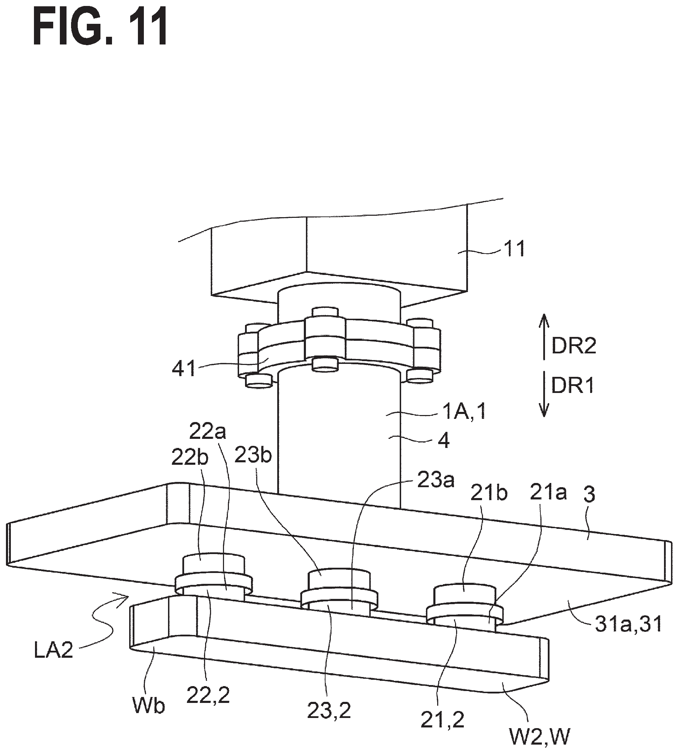

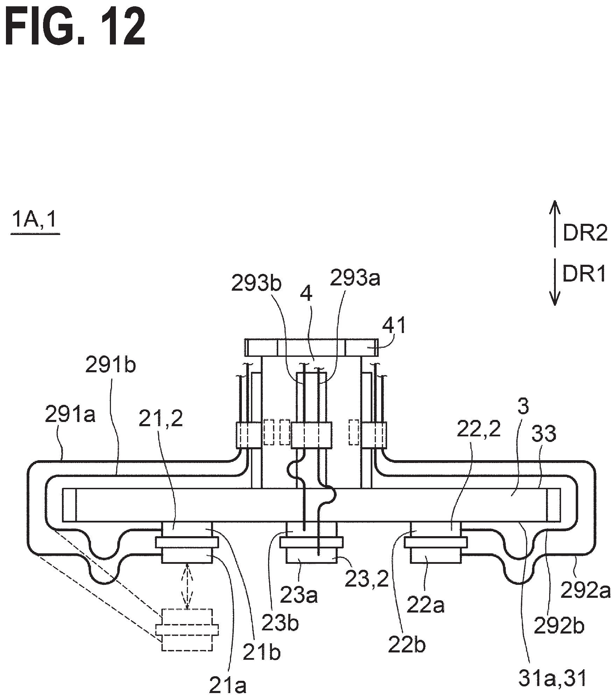

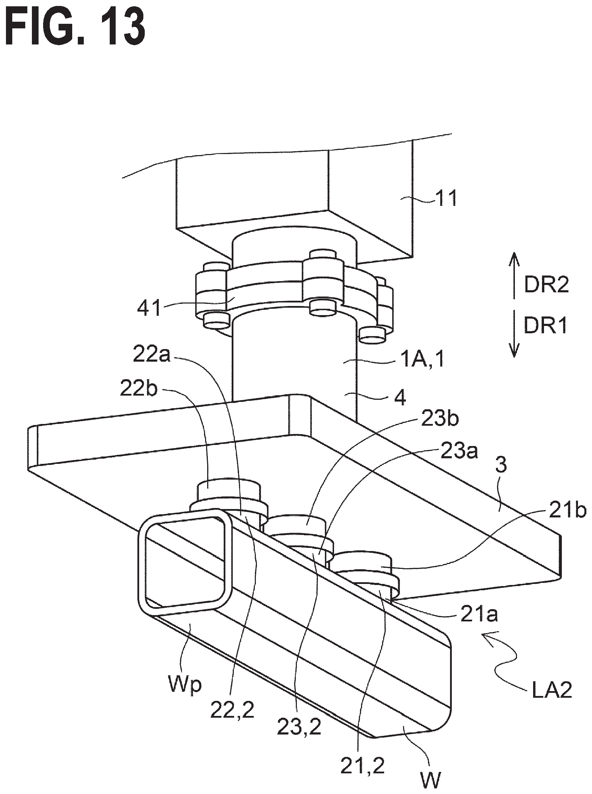

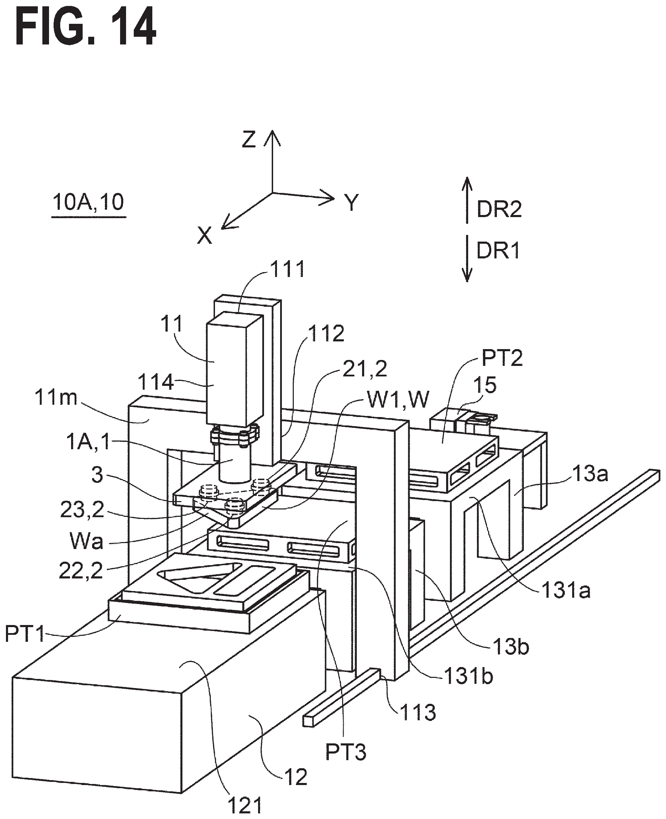

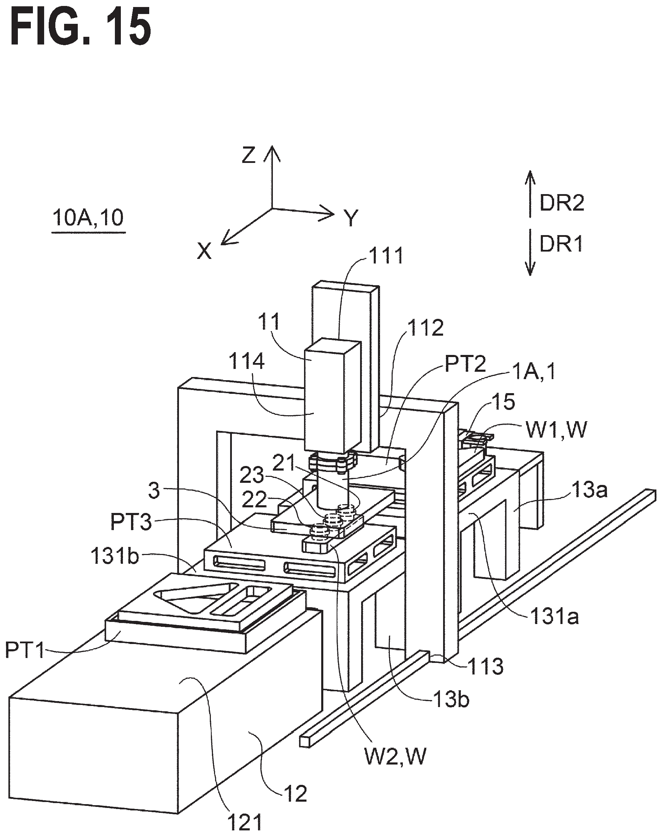

With reference to FIGs. 1 to 15, a workpiece transfer hand 1A and a workpiece transfer device 10A according to embodiment 1 will be described. FIG. 1 is a schematic perspective view illustrating a state where a workpiece W is attracted by the plurality of attachments 2. FIG. 2 is a schematic perspective view illustrating how each of the plurality of attachments 2 is attachable to and detachable from the plate 3. FIG. 3 is a schematic side view schematically illustrating a state before the workpiece W is attracted by the plurality of attachments 2. FIG. 4 is a schematic side view schematically illustrating a state where the workpiece W is attracted by the plurality of attachments 2. FIGs. 5 to 10 are schematic perspective views schematically illustrating how the layout of the plurality of attachments 2 is changed. FIG. 11 is a schematic perspective view illustrating a state where a second workpiece W2 is attracted by the plurality of attachments 2 disposed in a second layout LA2. FIG. 12 is a schematic side view schematically illustrating a workpiece transfer hand 1A according to embodiment 1. FIG. 13 is a schematic perspective view illustrating a state where a pipe workpiece Wp is attracted by the plurality of attachments 2 disposed in the second layout LA2. FIGs. 14 and 15 are schematic perspective views schematically illustrating a workpiece transfer device 10A according to embodiment 1.

As in the example illustrated in FIG. 1, the workpiece transfer hand 1A according to embodiment 1 includes the plurality of attachments 2 and the plate 3.

As in the example illustrated in FIG. 1, the plurality of attachments 2 include a first attachment 21 capable of attracting a workpiece W (for example, a first workpiece W1) and a second attachment 22 capable of attracting the workpiece W (for example, the first workpiece W1). The plurality of attachments 2 may include a third attachment 23 capable of attracting the workpiece W (for example, the first workpiece W1).

As in the example illustrated in FIG. 2, each of the plurality of attachments 2 is attached to the plate 3 by magnetic force.

As in the example illustrated in FIG. 2, the first attachment 21 includes a first electromagnet 21a and a second electromagnet 21b.

The first electromagnet 21a includes a first surface 211a coming into contact with the workpiece W (for example, the first workpiece W1). The first electromagnet 21a is capable of attracting the workpiece W (for example, the first workpiece W1). More specifically, with the first electromagnet 21a excited, the first electromagnet 21a attracts the workpiece W (for example, the first workpiece W1) by magnetic force.

The second electromagnet 21b includes a second surface 211b coming into contact with the plate 3. The second electromagnet 21b is capable of attracting the plate 3. More specifically, with the second electromagnet 21b excited, the second electromagnet 21b is attached to the plate 3 by magnetic force.

As in the examples illustrated in FIGs. 3 and 4, the first electromagnet 21a is tiltable with respect to the second electromagnet 21b. As a result, the first surface 211a of the first electromagnet 21a extends along the surface of the workpiece W. With the first surface 211a of the first electromagnet 21a and the surface of the workpiece W being in surface contact, the first electromagnet 21a can reliably attract the workpiece W.

In the workpiece transfer hand 1A according to embodiment 1, the first attachment 21 is capable of attracting the workpiece W by the magnetic force generated by the first electromagnet 21a. Therefore, the first attachment 21 can easily attract and release the workpiece W.

In the workpiece transfer hand 1A according to embodiment 1, the first attachment 21 is attachable to the plate 3 by the magnetic force generated by the second electromagnet 21b. Therefore, the first attachment 21 can be easily attached to and detached from the plate 3.

As in the example illustrated in FIG. 3, the first surface 211a, as the attraction surface of the first electromagnet 21a, may be inclined with respect to an attracted surface of the workpiece W (more specifically, an upper surface Wu of the workpiece W). For example, the first surface 211a may be inclined with respect to the attracted surface of the workpiece W due to deflection of the workpiece W, warpage of the components supporting the workpiece W, manufacturing errors of the first attachment 21, deflection of the plate 3, and the like.

In the workpiece transfer hand 1A according to embodiment 1, the first electromagnet 21a is tiltable with respect to the second electromagnet 21b. Therefore, tilting the first electromagnet 21a can reduce the tilting of the first surface 211a of the first electromagnet 21a with respect to the attracted surface of the workpiece W. Thus, the first attachment 21 (more specifically, the first electromagnet 21a) can more reliably attract the workpiece W.

### (Optional Configurations)

Next, with reference to FIGs. 1 to 15, optional configurations that can be adopted in the workpiece transfer hand 1A according to embodiment 1 (or the workpiece transfer device 10A according to embodiment 1) or a workpiece transfer hand 1B according to embodiment 2 described below (or a workpiece transfer device 10B according to embodiment 2 described below) will be described.

### (Second Attachment 22)

As in the example illustrated in FIG. 2, the second attachment 22 includes a third electromagnet 22a and a fourth electromagnet 22b.

The third electromagnet 22a includes a third surface 221a coming into contact with the workpiece W (for example, the first workpiece W1). The third electromagnet 22a is capable of attracting the workpiece W (for example, the first workpiece W1). More specifically, with the third electromagnet 22a excited, the third electromagnet 22a attracts the workpiece W (for example, the first workpiece W1) by magnetic force.

The fourth electromagnet 22b includes a fourth surface 221b coming into contact with the plate 3. The fourth electromagnet 22b is capable of attracting the plate 3. More specifically, with the fourth electromagnet 22b excited, the fourth electromagnet 22b is attached to the plate 3 by magnetic force.

As in the examples illustrated in FIGs. 3 and 4, the third electromagnet 22a is tiltable with respect to the fourth electromagnet 22b. Therefore, tilting the third electromagnet 22a can reduce the tilting of the third surface 221a of the third electromagnet 22a with respect to the attracted surface of the workpiece W (more specifically, the upper surface Wu of the workpiece W). Thus, the second attachment 22 (more specifically, the third electromagnet 22a) can more reliably attract the workpiece W.

### (Third Attachment 23)

As in the example illustrated in FIG. 2, the third attachment 23 includes a fifth electromagnet 23a and a sixth electromagnet 23b.

The fifth electromagnet 23a includes a fifth surface 231a coming into contact with the workpiece W (for example, the first workpiece W1). The fifth electromagnet 23a is capable of attracting the workpiece W (for example, the first workpiece W1). More specifically, with the fifth electromagnet 23a excited, the fifth electromagnet 23a attracts the workpiece W (for example, the first workpiece W1) by magnetic force.

The sixth electromagnet 23b includes a sixth surface 231b coming into contact with the plate 3. The sixth electromagnet 23b is capable of attracting the plate 3. More specifically, with the sixth electromagnet 23b excited, the sixth electromagnet 23b is attached to the plate 3 by magnetic force.

As in the examples illustrated in FIGs. 3 and 4, the fifth electromagnet 23a is tiltable with respect to the sixth electromagnet 23b. Therefore, tilting the fifth electromagnet 23a can reduce the tilting of the fifth surface 231a of the fifth electromagnet 23a with respect to the attracted surface of the workpiece W (more specifically, the upper surface Wu of the workpiece W). Thus, the third attachment 23 (more specifically, the fifth electromagnet 23a) can more reliably attract the workpiece W.

### (Layout Change of Plurality of Attachments 2)

As in the example illustrated in FIG. 5, the plurality of attachments 2 are attachable to the plate 3 in a first layout LA1.

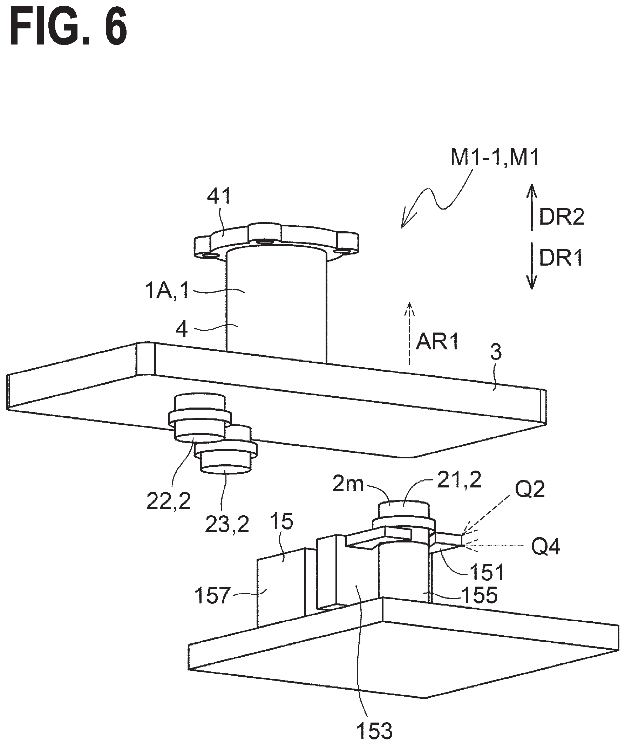

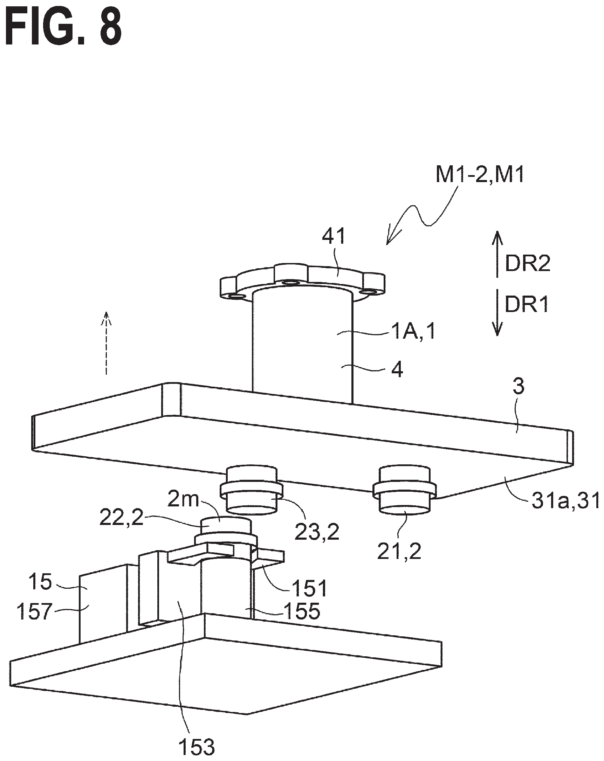

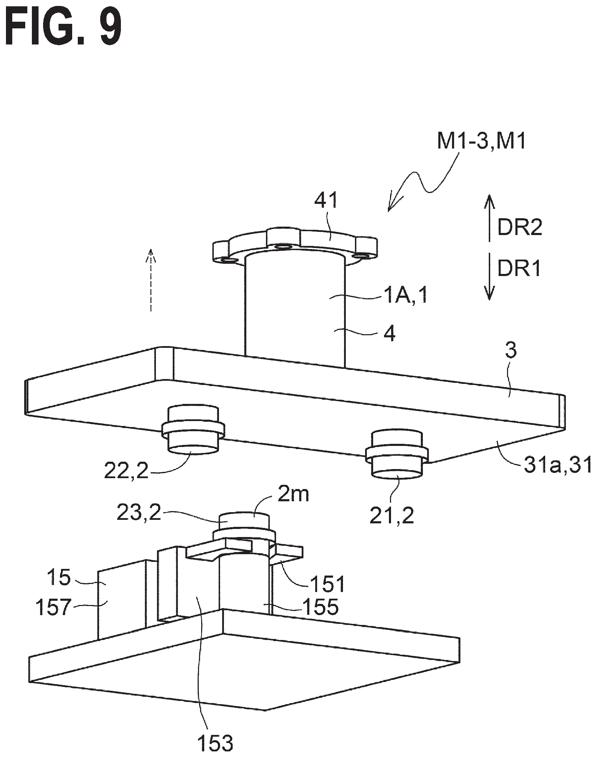

As in the examples illustrated in FIGs. 6 to 9, each of the plurality of attachments 2 is independently detachable from the plate 3. FIG. 6 illustrates a state where the first attachment 21 is detached from the plate 3. FIG. 8 illustrates a state where the second attachment 22 is detached from the plate 3. FIG. 9 illustrates a state where the third attachment 23 is detached from the plate 3.

Note that each of the plurality of attachments 2 being independently detachable from the plate 3 does not mean that the plurality of attachments 2 are necessarily detached from the plate 3 independently. For example, after all the work performed using the workpiece transfer hand 1A is completed, the plurality of attachments 2 may be detached from the plate 3 at once.

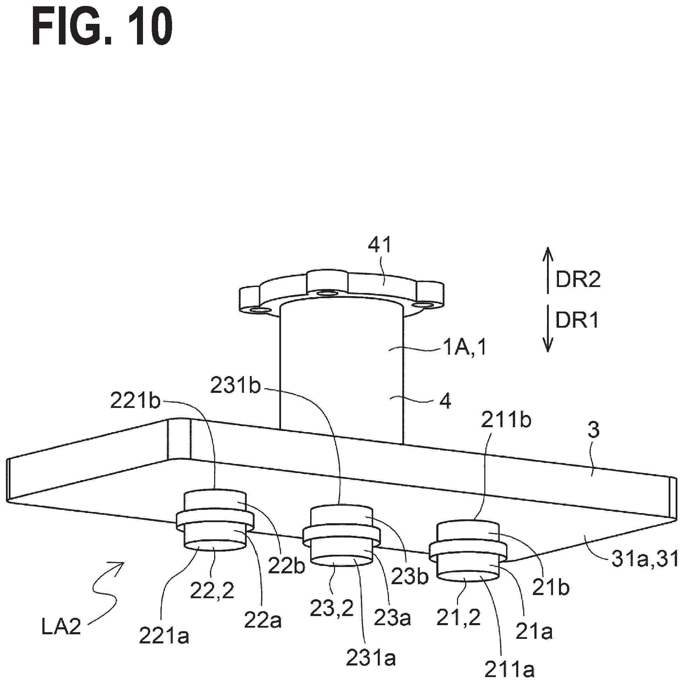

In the example illustrated in FIG. 10, the plurality of attachments 2 are reattachable to the plate 3 in the second layout LA2 different from the first layout LA1. As in the example illustrated in FIG. 11, the plurality of attachments 2 attached to the plate 3 in the second layout LA2 can attract another second workpiece W2 having a shape different from the workpiece W attracted by the plurality of attachments 2 attached to the plate 3 in the first layout LA1.

In the examples illustrated in FIGs. 5 to 10, the plurality of attachments 2 are attachable to the plate 3 in the first layout LA1. The plurality of attachments 2 are also detachable from the plate 3. Furthermore, the plurality of attachments 2 are reattachable to the plate 3 in the second layout LA2 different from the first layout LA1. In this case, there is no need to prepare multiple types of workpiece transfer hands to correspond to different workpiece shapes.

In the examples illustrated in FIGs. 5 to 10, each of the plurality of attachments 2 is independently detachable from the plate 3. For example, the first attachment 21 can be detached from the plate 3, while the second attachment 22 is attached to the plate 3. Thus, a degree of freedom is high in terms of changing the layout of the plurality of attachments 2.

### (Example of Procedure for Layout Change)

In the examples illustrated in FIGs. 5 to 10, the layout of the plurality of attachments 2 can be changed from the first layout LA1 (see FIG. 5) to the second layout LA2 (see FIG. 10), with at least one of the plurality of attachments 2 detached from the plate 3, and then reattached to the plate 3.

In the examples illustrated in FIGs. 5 to 10, the layout of the plurality of attachments 2 is changed from the first layout LA1 (see FIG. 5) to the second layout LA2 (see FIG. 10) with each of the first attachment 21, the second attachment 22, and the third attachment 23 detached from the plate 3, and then reattached to the plate 3.

In the examples illustrated in FIGs. 5 to 10, the plurality of attachments 2 are detached one by one, in order, from the plate 3. Each detached attachment 2 is then reattached to the plate 3 before the next attachment is detached from the plate 3. The order in which the plurality of attachments 2 are detached from the plate 3 is not particularly limited.

### (Plate Supporter 4)

In the example illustrated in FIG. 1, the workpiece transfer hand 1A includes the plate supporter 4 that supports the plate 3. In the example illustrated in FIG. 1, the plate supporter 4 has an attachment portion 41 that is attachable to a hand traveling device 11. When the hand traveling device 11 moves the workpiece transfer hand 1A, the workpiece W attracted by the plurality of attachments 2 is conveyed.

### (Plate 3)

The plate 3 is, for example, a ferromagnetic material that attracts the second electromagnet 21b when energized. The plate 3 is mainly composed of, for example, iron. The plate 3 has the attachment mounting surface 31a to which the plurality of attachments 2 are attached.

### (Cables for Supplying Current to Electromagnets)

In the example illustrated in FIG. 12, the workpiece transfer hand 1A includes a first cable 291a for supplying current to the first electromagnet 21a, a second cable 291b for supplying current to the second electromagnet 21b, a third cable 292a for supplying current to the third electromagnet 22a, a fourth cable 292b for supplying current to the fourth electromagnet 22b, a fifth cable 293a for supplying current to the fifth electromagnet 23a, and a sixth cable 293b for supplying current to the sixth electromagnet 23b.

### (Workpiece W)

In the example illustrated in FIG. 1, the workpiece W is a plate workpiece Wa. More specifically, the plurality of attachments 2 disposed in the first layout LA1 on the plate 3 can attract the plate workpiece Wa.

The workpiece W (more specifically, the plate workpiece Wa) is composed of, for example, a ferromagnetic material that is attracted by the first electromagnet 21a when energized. The workpiece W (more specifically, the plate workpiece Wa) is mainly composed of, for example, iron.

The plate workpiece Wa may be a thick plate. The thickness of the plate workpiece Wa is, for example, 1 cm or more, 2 cm or more, or 3 cm or more. Alternatively, the plate workpiece Wa may be a thin plate. The plate workpiece Wa may be a heavy workpiece. The mass of the plate workpiece Wa is, for example, 5 kg or more, or 10 kg or more. Alternatively, the plate workpiece Wa may be a lightweight workpiece.

### (Second Workpiece W2)

In the example illustrated in FIG. 11, the second workpiece W2 is a plate workpiece Wb. More specifically, the plurality of attachments 2 disposed in the second layout LA2 on the plate 3 can attract the second plate workpiece Wb.

The second workpiece W2 (more specifically, the second plate workpiece Wb) is composed of, for example, a ferromagnetic material that is attracted by the first electromagnet 21a when energized. The second workpiece W2 (more specifically, the second plate workpiece Wb) is mainly composed of, for example, iron.

The workpiece W or the second workpiece W2 may be a pipe workpiece. FIG. 13 illustrates how the pipe workpiece Wp is conveyed using the workpiece transfer hand 1A. In the example illustrated in FIG. 13, the plurality of attachments 2 disposed in the second layout LA2 on the plate 3 can attract the pipe workpiece Wp.

### (Workpiece transfer device 10A)

In the example illustrated in FIG. 14, the workpiece transfer device 10A includes the workpiece transfer hand 1A and the hand traveling device 11, which moves the workpiece transfer hand 1A. The workpiece transfer hand 1A has already been described, and the redundant description on the workpiece transfer hand 1A will be omitted. The workpiece transfer device 10A according to embodiment 1 provides the same effects as the workpiece transfer hand 1A according to embodiment 1.

### (Hand traveling device 11)

In the examples illustrated in FIGs. 14 and 15, the hand traveling device 11 can move the workpiece transfer hand 1A three dimensionally.

The hand traveling device 11 preferably has at least three degrees of freedom. In the examples illustrated in FIGs. 14 and 15, the hand traveling device 11 has one degree of freedom parallel to the vertical direction and two degrees of freedom parallel to the horizontal plane. The hand traveling device 11 may also have a rotational degree of freedom about an axis parallel to the vertical direction.

In this specification, the axis parallel to the vertical direction is defined as the Z axis, one axis parallel to the horizontal plane is defined as the X axis, and the axis orthogonal to both the Z axis and the X axis is defined as the Y axis. In the example illustrated in FIG. 14, the hand traveling device 11 includes a Z-axis mover 111 that moves the workpiece transfer hand 1A in a direction along the Z axis parallel to the vertical direction. The hand traveling device 11 may include a Y-axis mover 112 that moves the workpiece transfer hand 1A in a direction along the Y axis parallel to the horizontal plane. The hand traveling device 11 may include an X-axis mover 113 that moves the workpiece transfer hand 1A in a direction along the X axis, which is orthogonal to both the Z axis and the Y axis. Alternatively or additionally, the hand traveling device 11 may include a rotator 114 that rotates the workpiece transfer hand 1A about an axis parallel to the Z axis.

### (First Platform 12)

The workpiece transfer device 10A includes a first platform 12 capable of supporting a plurality of workpieces including the first workpiece W1 and the second workpiece W2. The first platform 12 may include a first pallet PT1 on which the plurality of workpieces including the first workpiece W1 and the second workpiece W2 can be placed, and a first support stand 121 that supports the plurality of workpieces via the first pallet PT1.

### (Second Platform 13a and Third Platform 13b)

The workpiece transfer device 10A may include a second platform 13a for receiving the first workpiece W1 conveyed by the workpiece transfer hand 1A. The second platform 13a may include a second pallet PT2 on which the first workpiece W1 can be placed, and a second support stand 131a that supports the first workpiece W1 via the second pallet PT2. In the example illustrated in FIG. 14, the workpiece transfer device 10A conveys the first workpiece W1 from the first platform 12 to the second platform 13a.

The workpiece transfer device 10A may include a third platform 13b for receiving the second workpiece W2 conveyed by the workpiece transfer hand 1A. The third platform 13b may include a third pallet PT3 on which the second workpiece W2 can be placed, and a third support stand 131b that supports the second workpiece W2 via the third pallet PT3. In the example illustrated in FIG. 15, the workpiece transfer device 10A conveys the second workpiece W2 from the first platform 12 to the third platform 13b.

At least one item (for example, the first workpiece W1) classified as a first group of the plurality of workpieces including the first workpiece W1 and the second workpiece W2 may be conveyed to the second platform 13a (more specifically, the second pallet PT2).

At least one item (for example, the second workpiece W2) classified as a second group of the plurality of workpieces including the first workpiece W1 and the second workpiece W2 may be conveyed to the third platform 13b (more specifically, the third pallet PT3).

Alternatively, the workpiece transfer device 10A may convey the first workpiece W1 to one side portion of the second platform 13a (for example, one side portion of the second pallet PT2) and convey the second workpiece W2 to the other side portion of the second platform 13a (for example, the other side portion of the second pallet PT2).

### (Attachment Supporter 15)

In the examples illustrated in FIGs. 14 and 15, the workpiece transfer device 10A includes an attachment supporter 15 that supports an attachment 2, out of the plurality of attachments 2, that has been detached from the plate 3.

In the examples illustrated in FIGs. 5 to 8, the attachment position of the first attachment 21 with respect to the plate 3 is changed by the movement of the workpiece transfer hand 1A relative to the first attachment 21 supported by the attachment supporter 15. In the examples illustrated in FIGs. 5 to 8, there is no need to manually change the attachment position of the first attachment 21. Thus, the operator's workload does not increase.

In the examples illustrated in FIGs. 5 to 8, the attachment position of the first attachment 21 with respect to the plate 3 is changed by the movement of the workpiece transfer hand 1A.

More specifically, as in the example illustrated in FIG. 6, changing the attachment position of the first attachment 21 with respect to the plate 3 includes moving the workpiece transfer hand 1A by the hand traveling device 11 (not illustrated in FIG. 6) in a direction (more specifically, the vertical direction) away from the first attachment 21 supported by the attachment supporter 15 (see a dashed-line arrow AR1 in FIG. 6). As the workpiece transfer hand 1A moves in a direction away from the first attachment 21 supported by the attachment supporter 15, the plate 3 moves away from the first attachment 21.

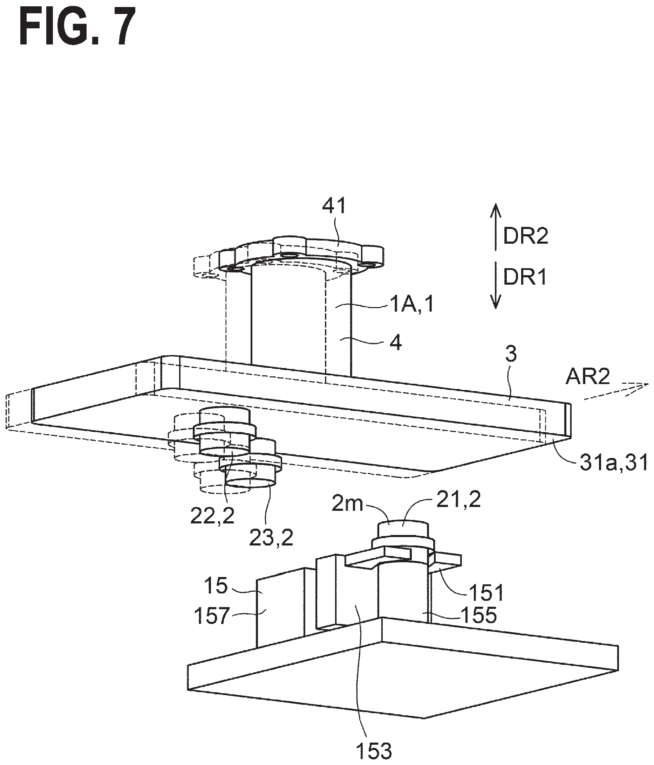

As in the example illustrated in FIG. 7, changing the attachment position of the first attachment 21 with respect to the plate 3 includes moving the workpiece transfer hand 1A by the hand traveling device 11 (not illustrated in FIG. 7) in a direction (more specifically, a direction parallel to the horizontal plane) intersecting the Z axis, which is parallel to the vertical direction (see a dashed-line arrow AR2 in FIG. 7).

Changing the attachment position of the first attachment 21 with respect to the plate 3 includes moving the workpiece transfer hand 1A by the hand traveling device 11 in a direction (more specifically, the vertical downward direction) toward the first attachment 21 supported by the attachment supporter 15. With the movement of the workpiece transfer hand 1A in the direction toward the first attachment 21 supported by the attachment supporter 15, the first attachment 21 is reattached to the plate 3. FIG. 8 illustrates the state after the first attachment 21 has been reattached to the plate 3.

In this specification, the attachment, out of the plurality of attachments 2, that has been detached from the plate 3 is defined as a detached attachment 2m.

As in the examples illustrated in FIGs. 5 and 6, the attachment supporter 15 includes a gripping component 151 that grips the detached attachment 2m (for example, the first attachment 21) and a gripping component mover 153 that moves the gripping component 151 between an open position Q1 (see FIG. 5) and a closed position Q2 (see FIG. 6).

The attachment supporter 15 may include a stand 155 on which the detached attachment 2m (for example, the first attachment 21) is placed.

Additionally, the attachment supporter 15 may include a lifting device 157 that moves the gripping component 151 between a lowered position Q3 (see FIG. 5) and a raised position Q4 (see FIG. 6).

### (Embodiment 2)

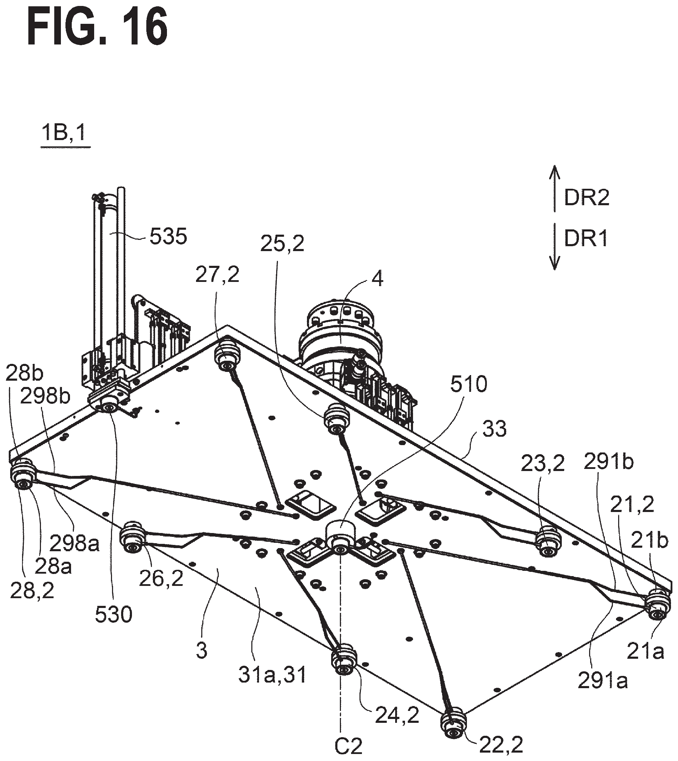

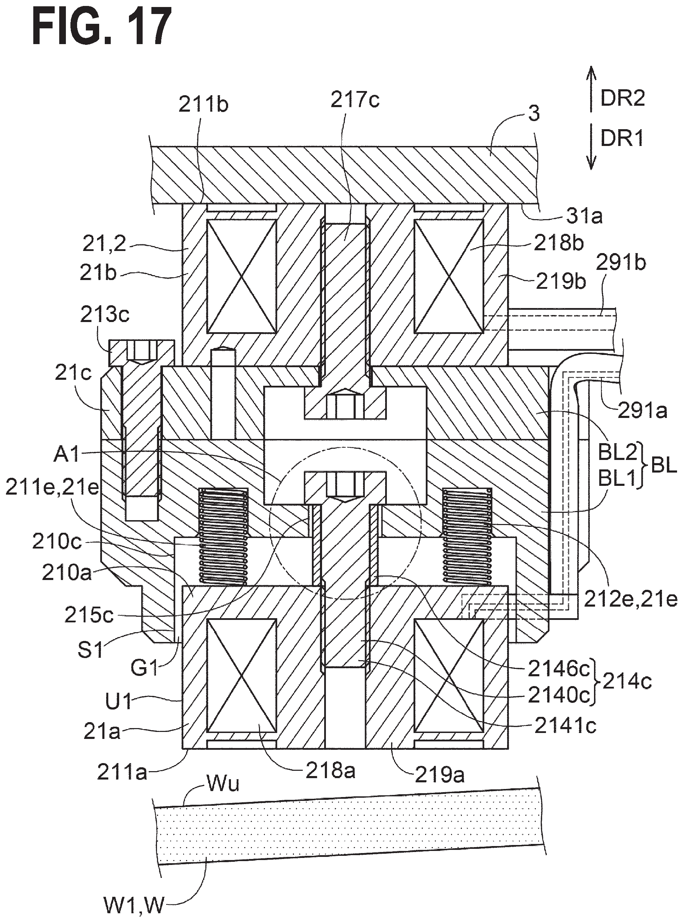

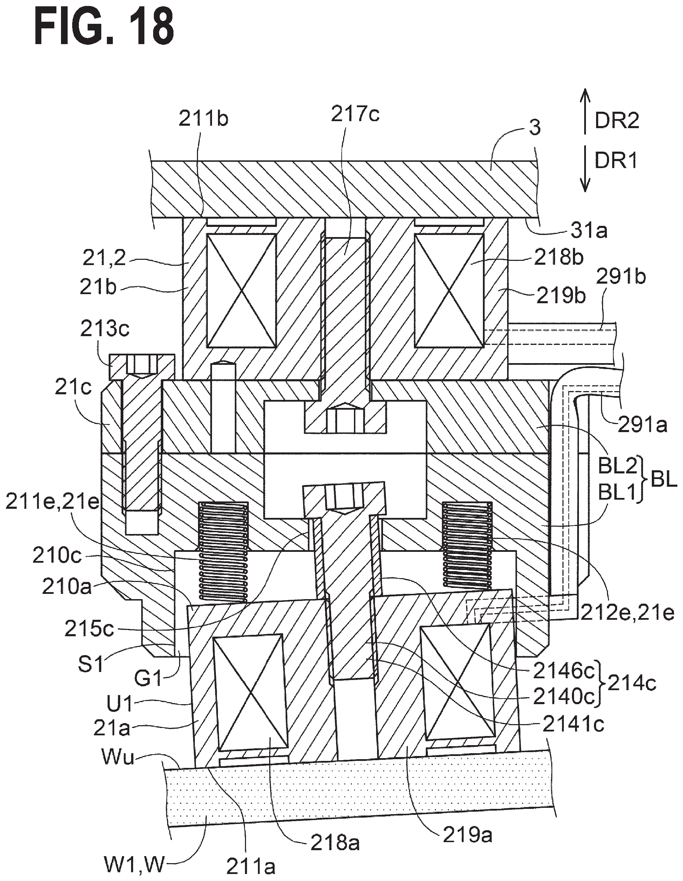

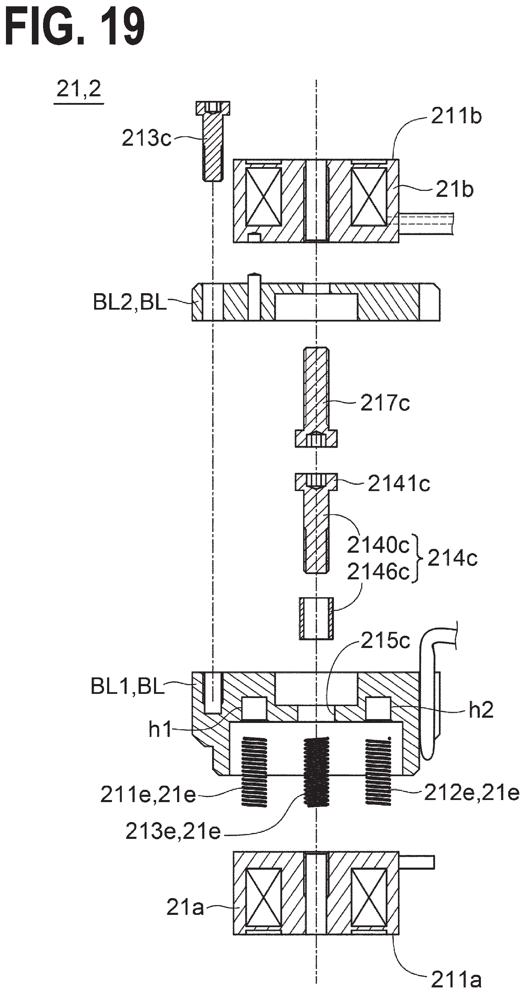

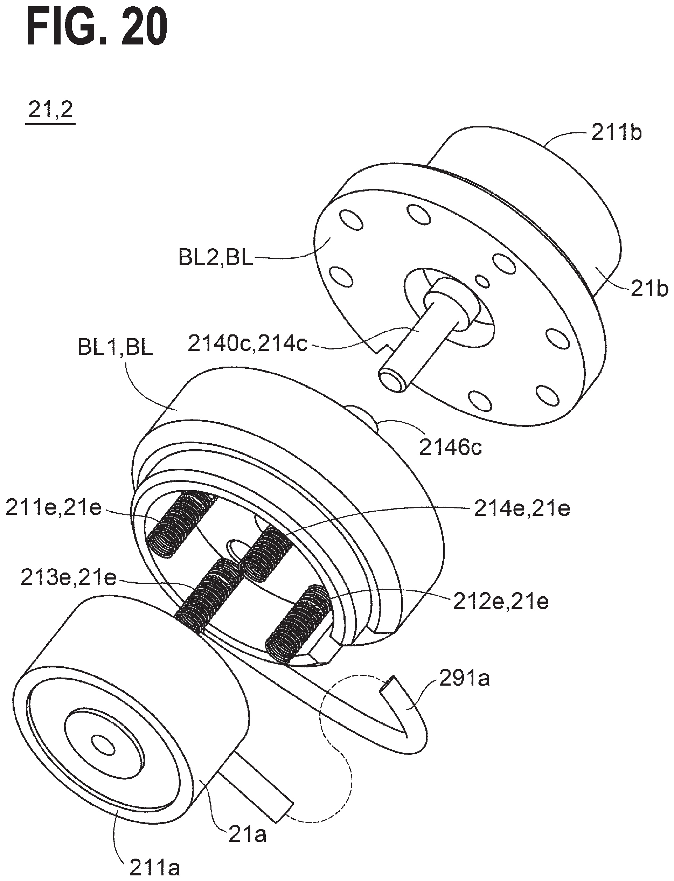

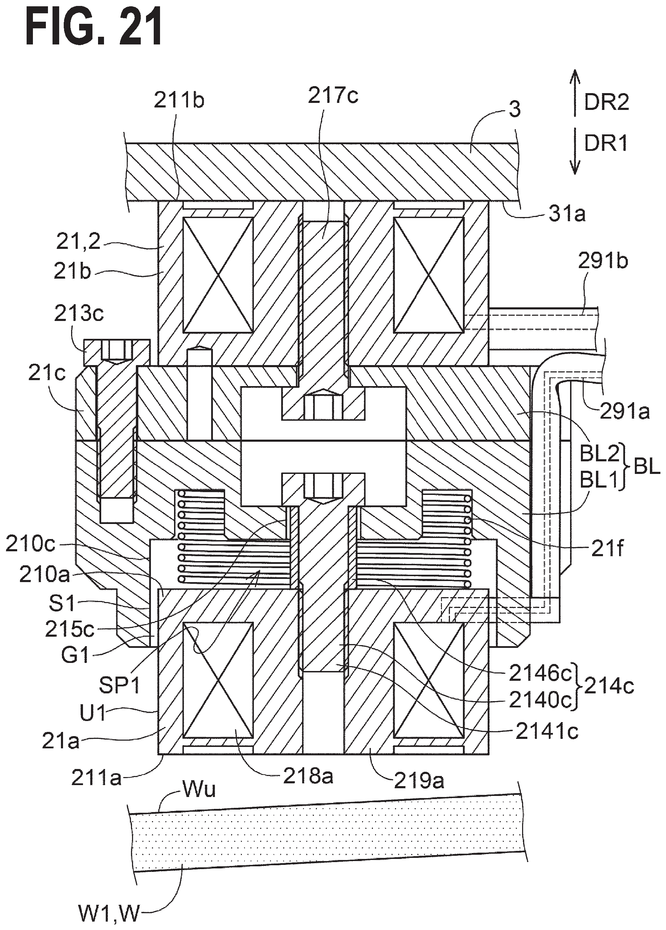

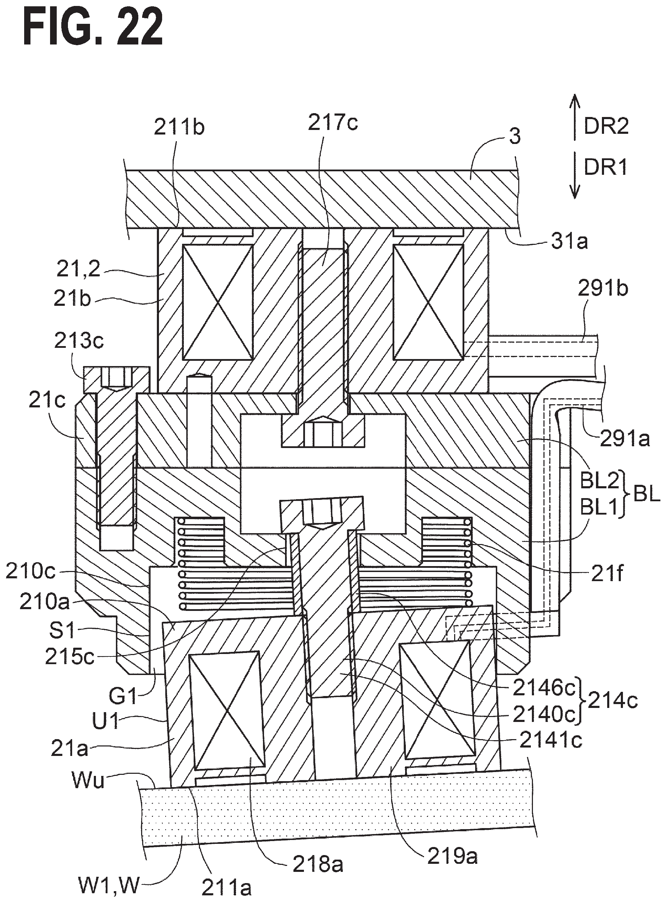

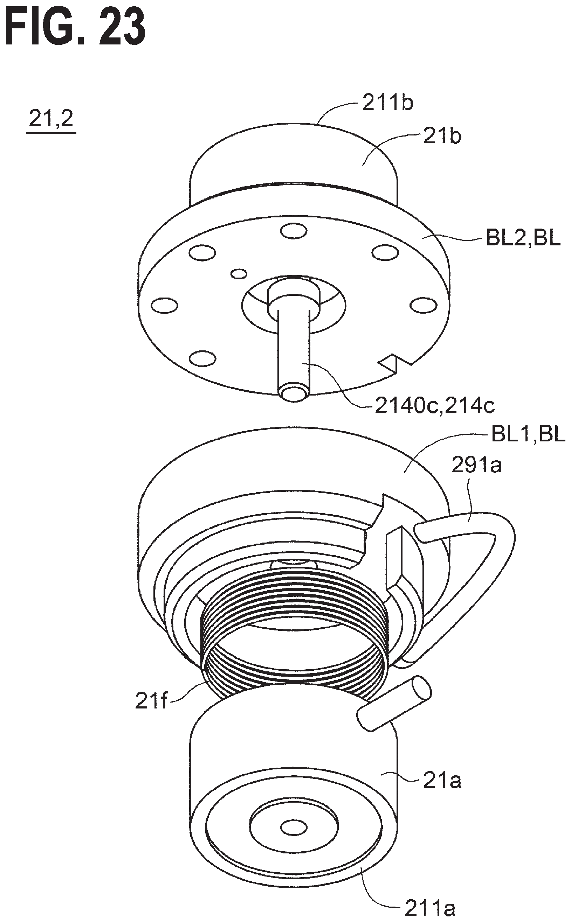

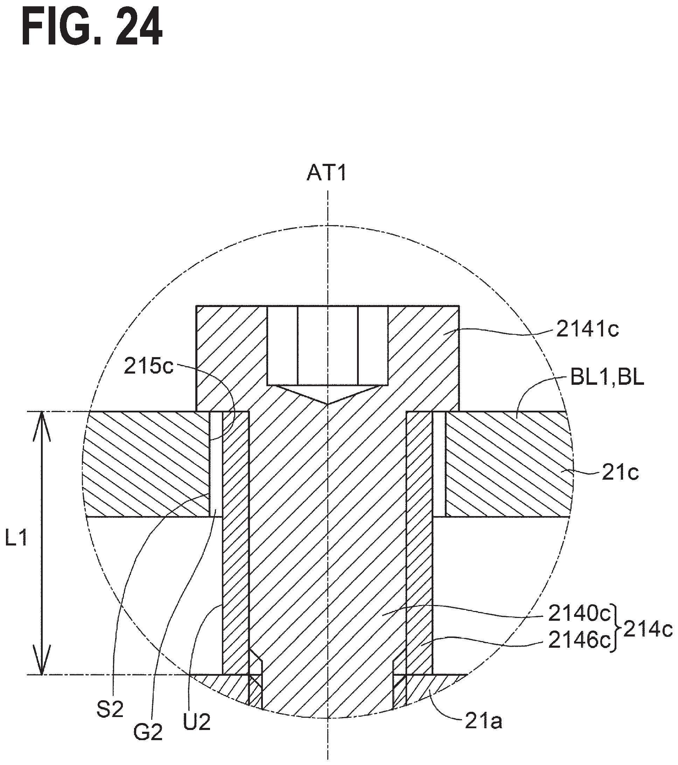

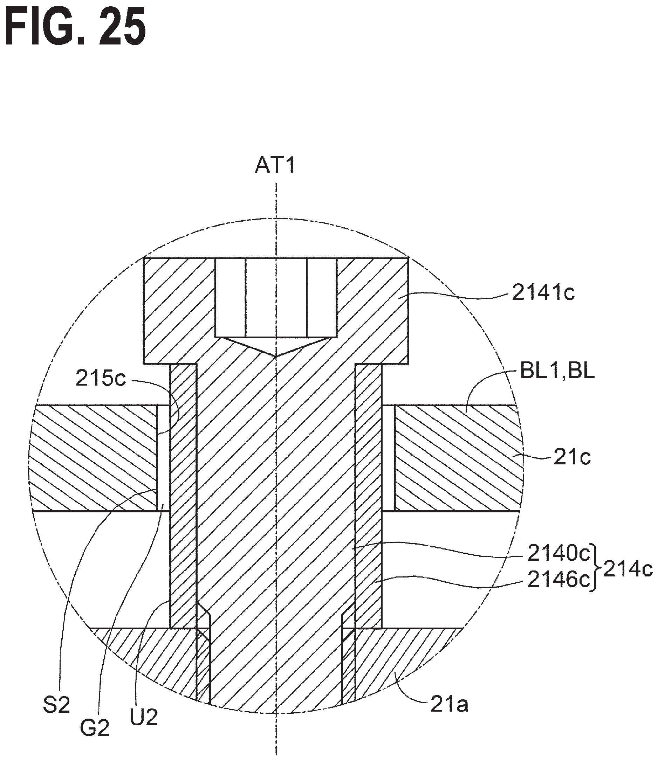

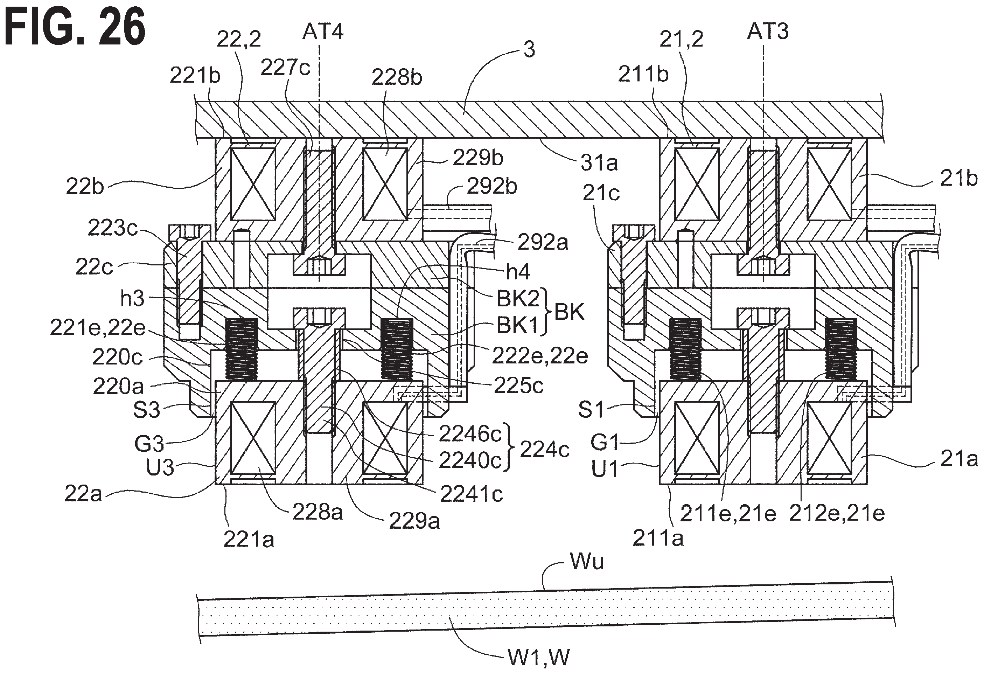

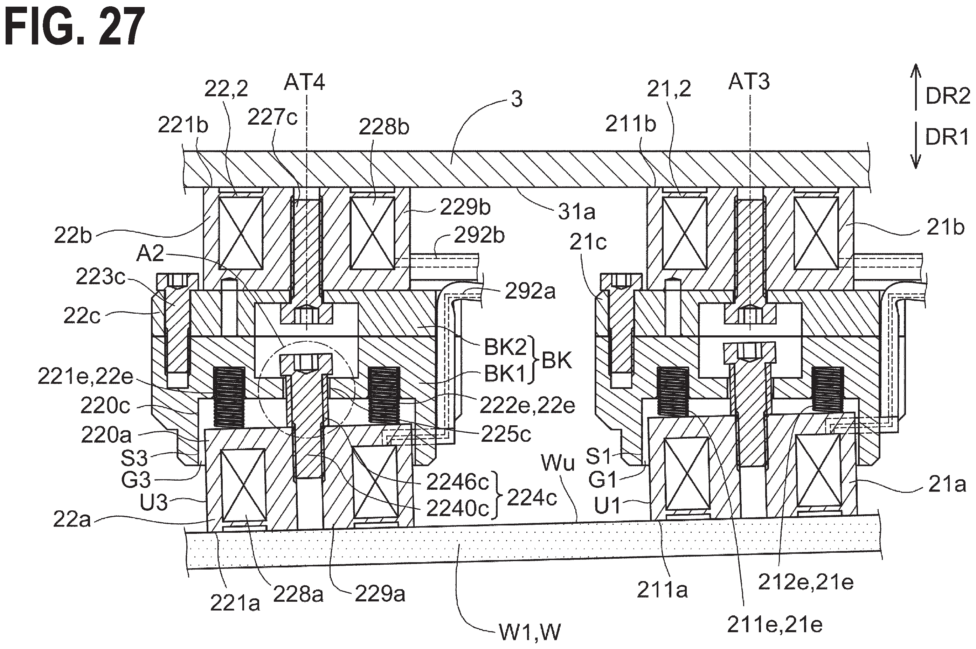

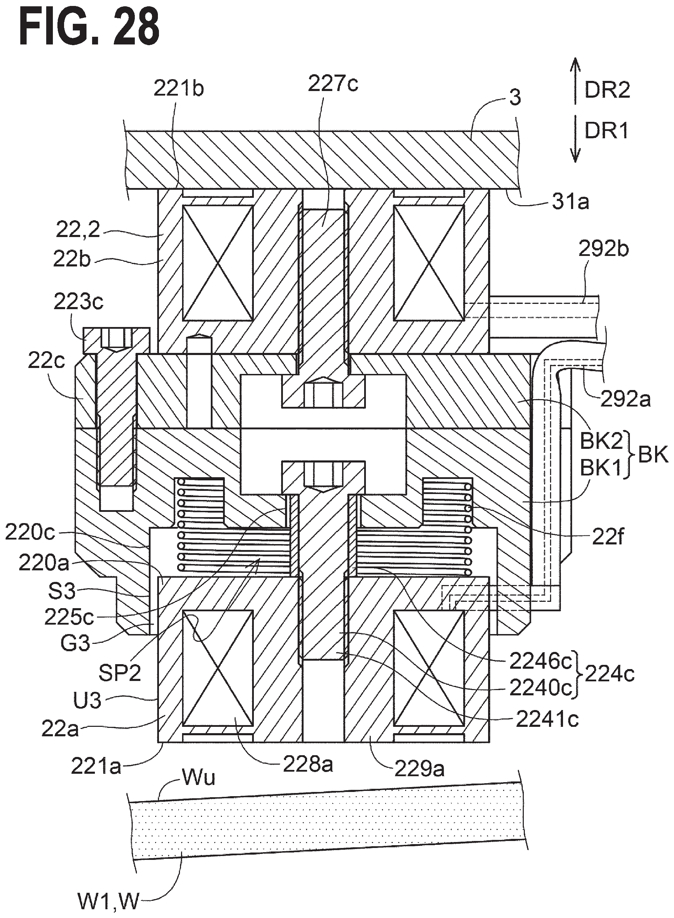

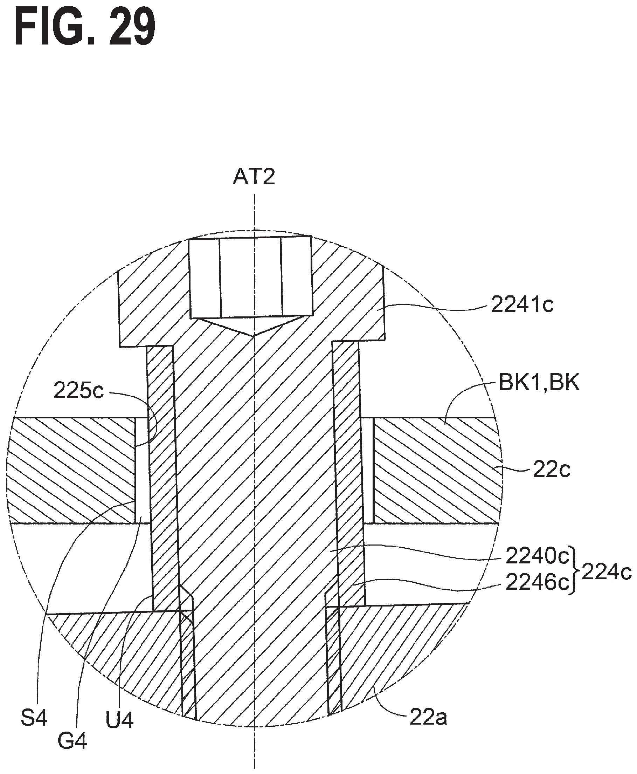

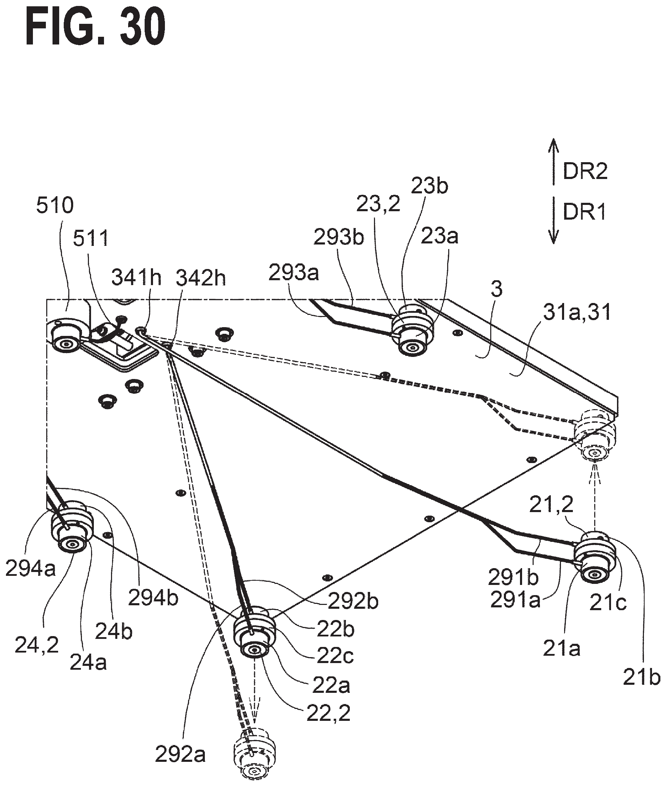

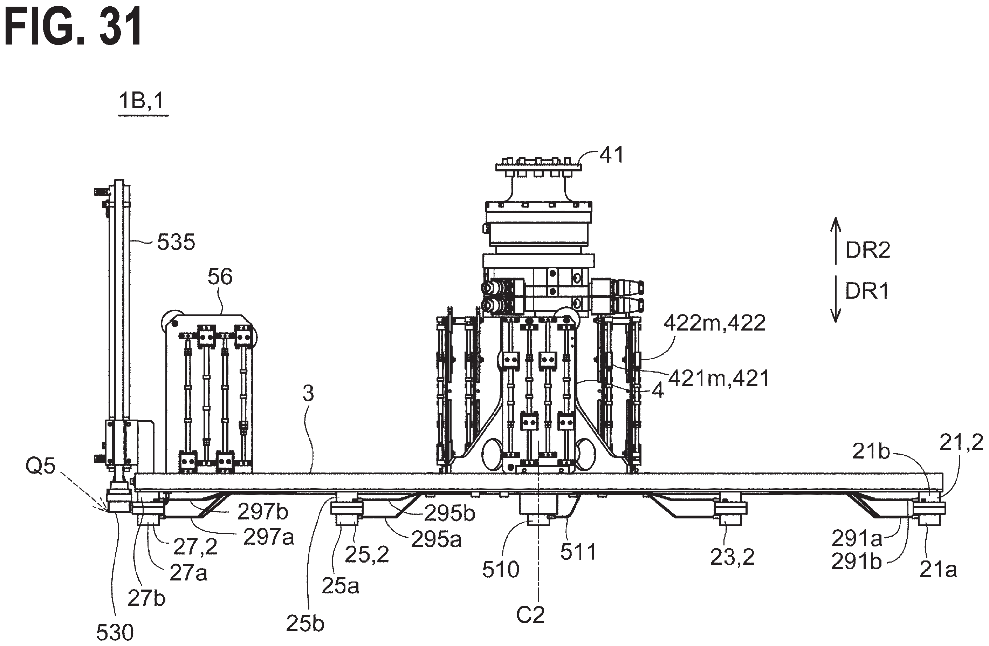

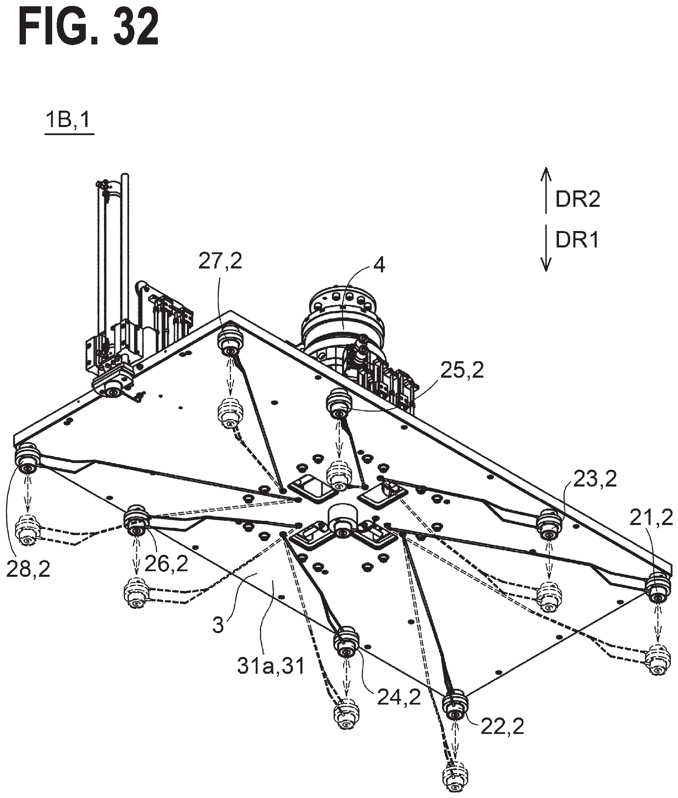

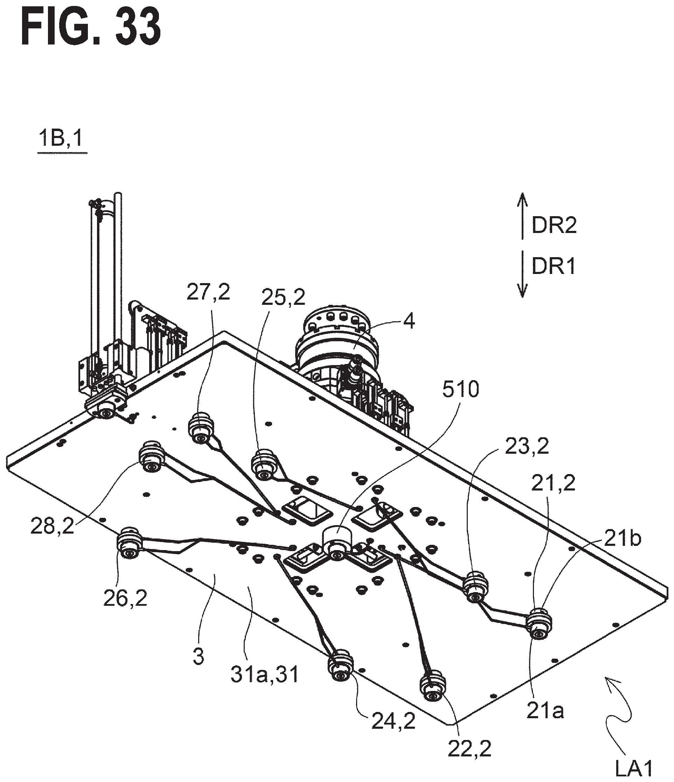

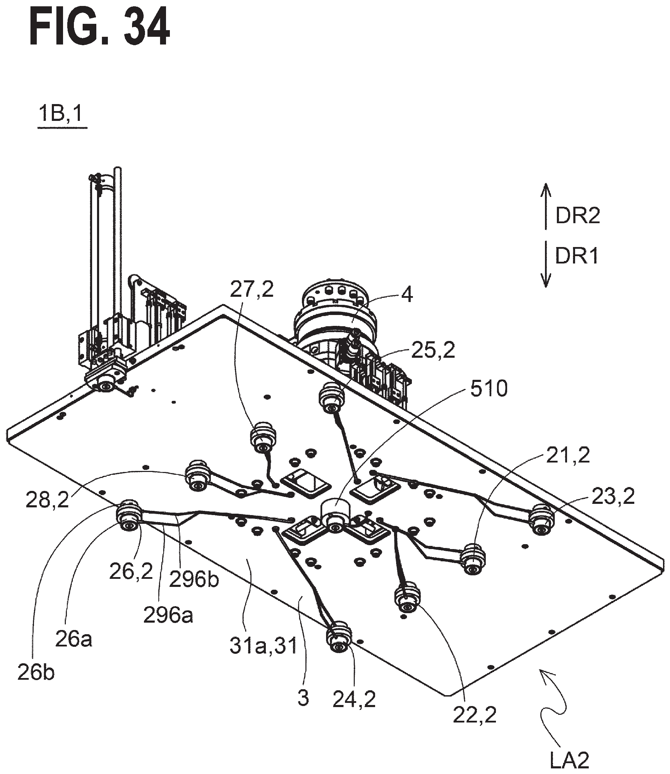

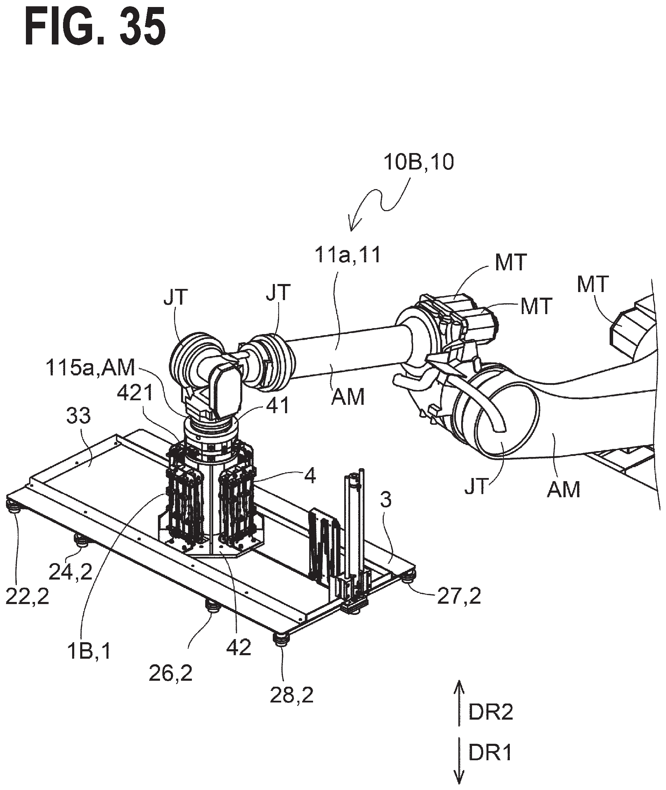

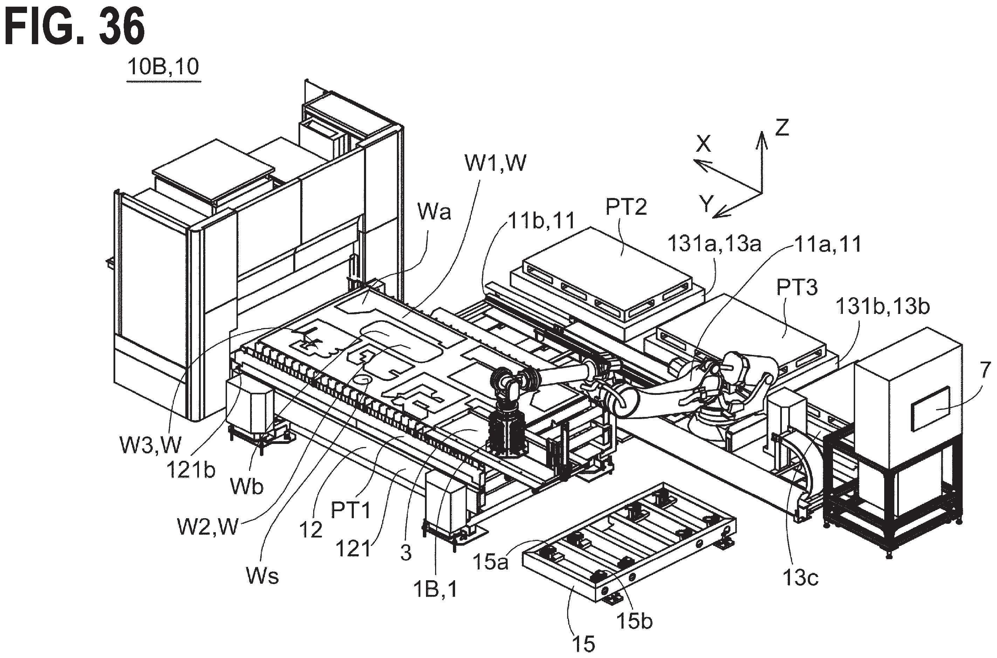

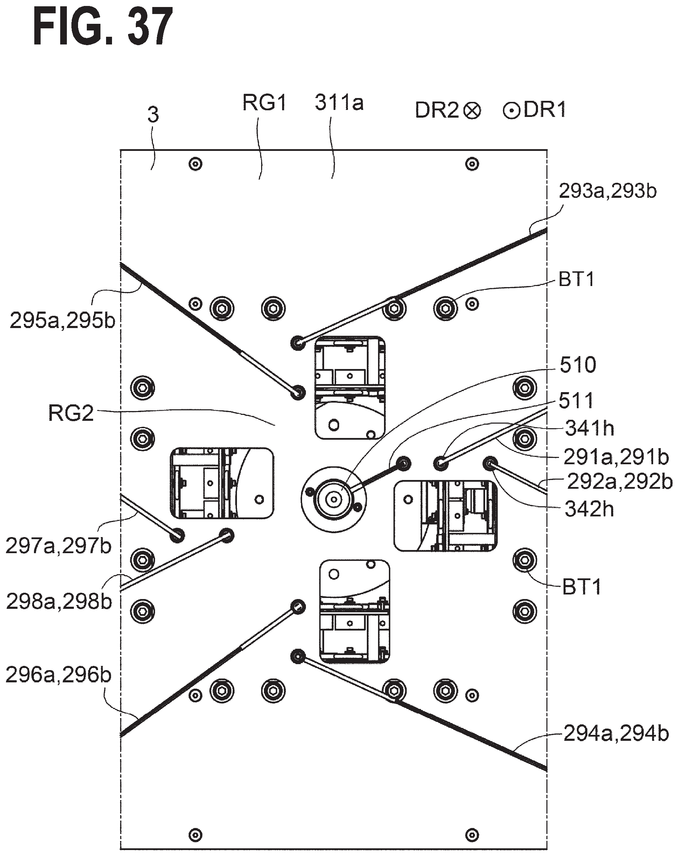

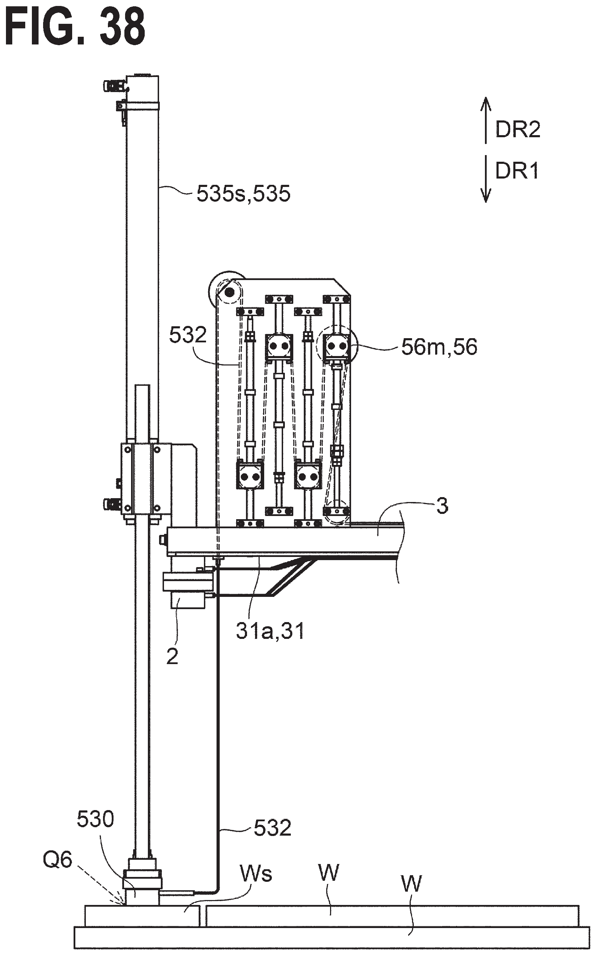

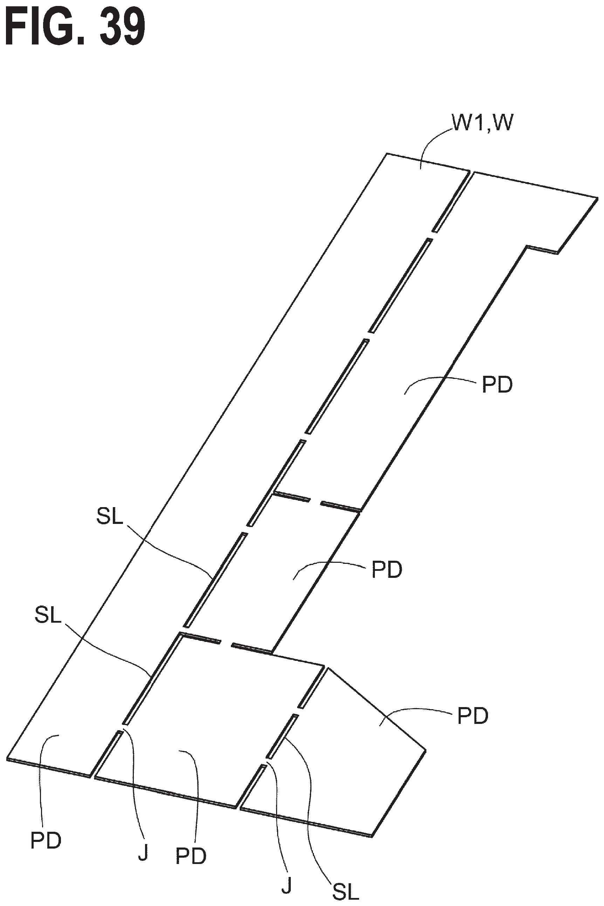

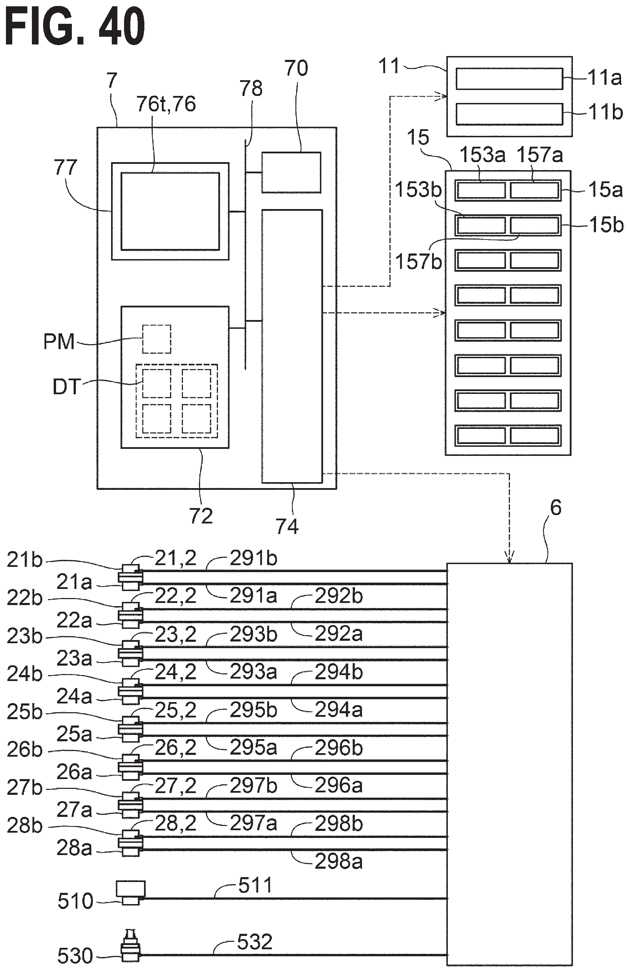

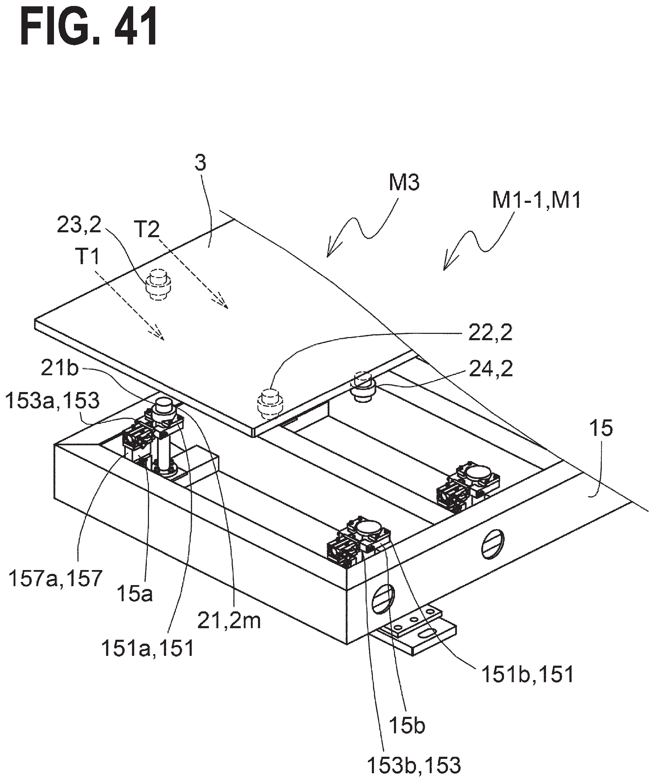

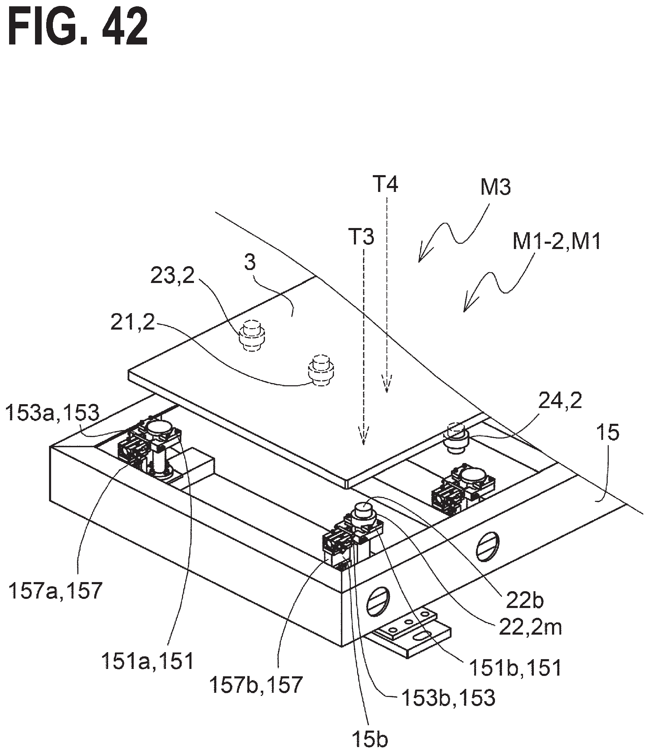

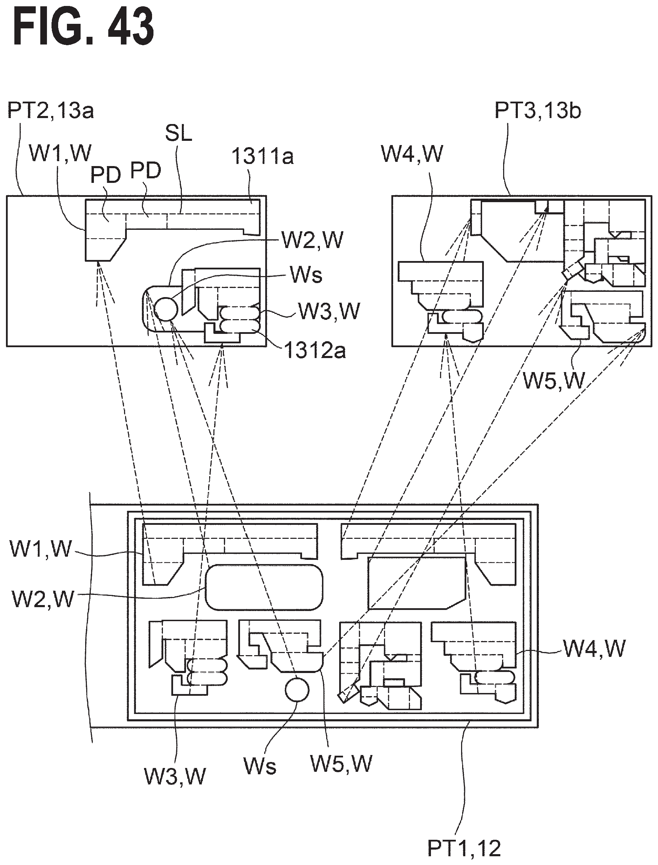

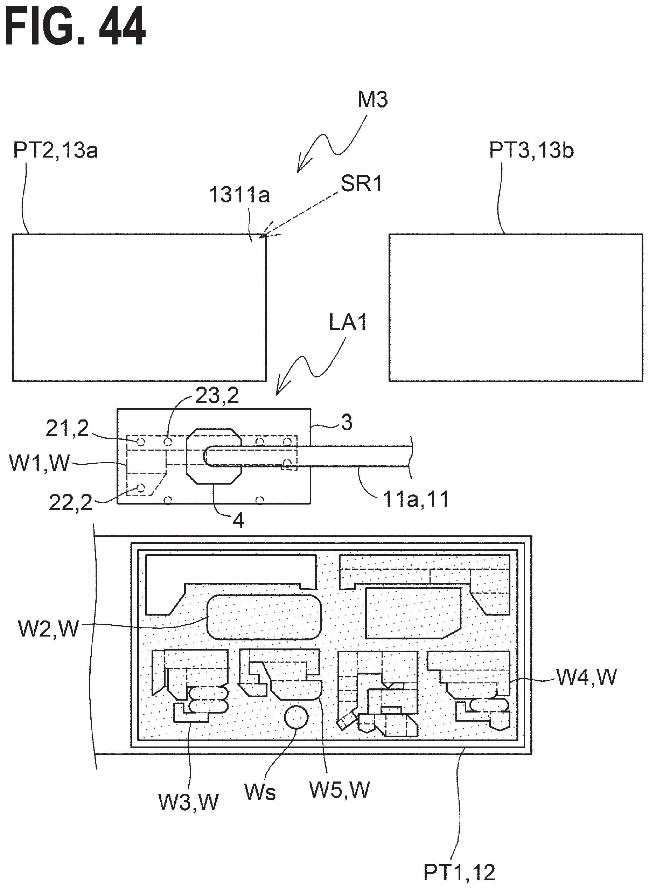

With reference to FIGs. 1 to 48, the workpiece transfer hand 1B and the workpiece transfer device 10B according to embodiment 2 will be described. FIG. 16 is a schematic perspective view illustrating the workpiece transfer hand 1B according to embodiment 2. FIG. 17 is a schematic cross-sectional view illustrating a state before the workpiece W is attracted by the first attachment 21. FIG. 18 is a schematic cross-sectional view illustrating a state after the workpiece W is attracted by the first attachment 21. FIG. 19 is an exploded cross-sectional view of the first attachment 21. FIG. 20 is an exploded perspective view of the first attachment 21. FIG. 21 is a schematic cross-sectional view illustrating a state before the workpiece W is attracted by the first attachment 21 according to a modification. FIG. 22 is a schematic cross-sectional view illustrating a state after the workpiece W is attracted by the first attachment 21 according to the modification. FIG. 23 is an exploded perspective view of the first attachment 21 according to the modification. FIG. 24 is an enlarged view of a region surrounded by a one-dot-chain line circle A1 in FIG. 17. FIG. 25 is a schematic cross-sectional view illustrating how a first shaft component 214c is movable relative to a first hole part 215c. FIG. 26 is a schematic cross-sectional view illustrating a state before the workpiece W is attracted by the first attachment 21 and the second attachment 22. FIG. 27 is a schematic cross-sectional view illustrating a state after the workpiece W is attracted by the first attachment 21 and the second attachment 22. FIG. 28 is a schematic cross-sectional view illustrating a state before the workpiece W is attracted by the second attachment 22 according to the modification. FIG. 29 is an enlarged view of a region surrounded by a one-dot-chain line circle A2 in FIG. 27. FIG. 30 is a schematic perspective view illustrating a part of the workpiece transfer hand 1B according to embodiment 2. FIG. 31 is a schematic side view schematically illustrating the workpiece transfer hand 1B according to embodiment 2. FIG. 32 is a schematic perspective view illustrating how each of the plurality of attachments 2 is attachable to and detachable from the plate 3. FIGs. 33 and 34 are schematic perspective views schematically illustrating the workpiece transfer hand 1B according to embodiment 2. FIG. 35 is a schematic perspective view illustrating a part of the workpiece transfer device 10B according to embodiment 2. FIG. 36 is a schematic perspective view illustrating the workpiece transfer device 10B according to embodiment 2. FIG. 37 is a schematic bottom view schematically illustrating a part of the workpiece transfer hand 1B according to embodiment 2. FIG. 38 is a schematic side view schematically illustrating a state where a small workpiece Ws is attracted by a movable electromagnet 530. FIG. 39 is a schematic perspective view illustrating an example of the workpiece W. FIG. 40 is a diagram schematically illustrating how a controller 7 can control a plurality of control target devices. FIG. 41 is a schematic perspective view illustrating how a first position change mode M1-1 is executed. FIG. 42 is a schematic perspective view illustrating how a second position change mode M1-2 is executed. In FIGs. 41 and 42, the plurality of attachments 2 located below the plate 3 are indicated by dashed lines, to facilitate recognition of the arrangement of the plurality of attachments 2 attached to the plate 3. FIG. 43 is a schematic plan view schematically illustrating how the plurality of workpieces W are sorted into a plurality of groups. FIGs. 44 to 48 are schematic plan views schematically illustrating how a sorting mode M3 is executed. In FIGs. 44 to 46, the plurality of attachments 2 and the workpiece W located below the plate 3 are indicated by dashed lines, to facilitate recognition of the arrangement of the plurality of attachments 2 attached to the plate 3 and the arrangement of the workpiece W attracted by the plurality of attachments 2.

In embodiment 2, differences from embodiment 1 will be mainly described. In embodiment 2, the redundant description on what have been described in embodiment 1 will be omitted. Thus, it is a matter of course that what have been described in embodiment 1, which are not explicitly described in embodiment 2, can be applied to embodiment 2. Conversely, what are described in embodiment 2 can be adopted in embodiment 1.

As in the example illustrated in FIG. 16, the workpiece transfer hand 1B according to embodiment 2 includes: (1) the plurality of attachments 2 including the first attachment 21 capable of attracting the workpiece W and the second attachment 22 capable of attracting the workpiece W; and (2) the plate 3 to which each of the plurality of attachments 2 is attached by magnetic force.

As in the example illustrated in FIG. 17, the first attachment 21 includes: (1) the first electromagnet 21a that includes the first surface 211a coming into contact with the workpiece W and is capable of attracting the workpiece W; and (2) the second electromagnet 21b that includes the second surface 211b coming into contact with the plate 3 and is capable of attracting the plate 3.

As in the examples illustrated in FIGs. 17 and 18, the first electromagnet 21a is tiltable with respect to the second electromagnet 21b. Tilting the first electromagnet 21a can reduce the tilting of the first surface 211a of the first electromagnet 21a with respect to the attracted surface of the workpiece W (more specifically, the upper surface Wu of the workpiece W). More specifically, when the first surface 211a of the first electromagnet 21a is inclined with respect to the attracted surface of the workpiece W, the first surface 211a and the first electromagnet 21a are tilted with respect to the attracted surface of the workpiece W. As a result of tilting the first surface 211a and the first electromagnet 21a with respect to the attracted surface of the workpiece W, the first surface 211a of the first electromagnet 21a extends along the attracted surface of the workpiece W. With the first surface 211a of the first electromagnet 21a and the attracted surface of the workpiece W being in surface contact, the first electromagnet 21a can reliably attract the workpiece W.

### (Optional Configurations)

Next, with reference to FIGs. 1 to 48, optional configurations that can be adopted in the workpiece transfer hand 1B according to embodiment 2 (or the workpiece transfer device 10B according to embodiment 2) or the workpiece transfer hand 1A according to embodiment 1 described above (or the workpiece transfer device 10A according to embodiment 1 described above) will be described.

### (First Attachment 21)

In the example illustrated in FIG. 17, the first attachment 21 includes a first support 21c attached to the second electromagnet 21b. The first support 21c tiltably supports the first electromagnet 21a.

The first support 21c electrically insulates the first electromagnet 21a from the second electromagnet 21b.

In the examples illustrated in FIGs. 17 and 19, the first support 21c includes a block BL disposed between the first electromagnet 21a and the second electromagnet 21b. The block BL is, for example, made of an electrically insulating material.

As in the example illustrated in FIG. 17, the first support 21c may include a first block BL1 disposed between the first electromagnet 21a and the second electromagnet 21b, a second block BL2 disposed between the first block BL1 and the second electromagnet 21b, and a fixing component 213c that fixes the first block BL1 to the second block BL2. In the example illustrated in FIG. 17, the first block BL1 supports the first electromagnet 21a, and the second block BL2 supports the second electromagnet 21b. When the first support 21c includes the first block BL1, the second block BL2, and the fixing component 213c, the first attachment 21 can be easily assembled.

The first block BL1 is, for example, made of an electrically insulating material. The second block BL2 is, for example, made of an electrically insulating material.

As in the example illustrated in FIG. 17, the first attachment 21 (more specifically, the first support 21c) may include the first shaft component 214c (more specifically, a first fixing component 2140c) attached to the first electromagnet 21a. In the example illustrated in FIG. 17, the first shaft component 214c couples the first electromagnet 21a and the first support 21c. The first shaft component 214c may couple the first electromagnet 21a and the block BL (more specifically, the first block BL1). In the example illustrated in FIG. 17, the first shaft component 214c is attached to a center portion of an upper end portion 210a of the first electromagnet 21a.

In the example illustrated in FIG. 17, the first shaft component 214c includes the first fixing component 2140c (more specifically, a first bolt 2141c) attached to the first electromagnet 21a.

The first shaft component 214c may include a first spacer 2146c into which the first fixing component 2140c is inserted. In the example illustrated in FIG. 19, the first spacer 2146c has a cylindrical shape. In the example illustrated in FIG. 17, the first spacer 2146c is inserted into the first hole part 215c formed in the first support 21c (more specifically, the block BL). As in the example illustrated in FIG. 17, the first spacer 2146c may be a component that defines the distance between the upper surface of the first electromagnet 21a and the head of the first bolt 2141c. In the example illustrated in FIG. 24, a distance L1 between the upper surface of the first electromagnet 21a and the lower surface of the head of the first bolt 2141c is equal to the length of the first spacer 2146c. The first spacer 2146c may be omitted.

As in the example illustrated in FIG. 17, the first support 21c may include a fixing component 217c (for example, a bolt) that fixes the first support 21c to the second electromagnet 21b. In the example illustrated in FIG. 17, the fixing component 217c fixes the first support 21c to the second electromagnet 21b so that the first support 21c is not tiltable with respect to the second electromagnet 21b. Alternatively, the first support 21c may be tiltable with respect to the second electromagnet 21b.

In the example illustrated in FIG. 17, the first attachment 21 includes a first group of springs 21e. In the examples illustrated in FIGs. 17 and 18, when the first electromagnet 21a tilts with respect to the second electromagnet 21b, the first group of springs 21e deform.

In the examples illustrated in FIGs. 17 and 18, when the first surface 211a of the first electromagnet 21a comes into contact with the workpiece W, the first group of springs 21e expand and contract. As a result, the first surface 211a of the first electromagnet 21a can be aligned with the attracted surface of the workpiece W (more specifically, the upper surface Wu of the workpiece W).

In the example illustrated in FIG. 17, the first group of springs 21e are disposed between the first support 21c and the first electromagnet 21a. As in the example illustrated in FIG. 17, the first group of springs 21e may be disposed between the block BL (more specifically, the first block BL1) and the first electromagnet 21a.

In the examples illustrated in FIGs. 17 and 18, when the first electromagnet 21a tilts with respect to the first support 21c (more specifically, the first block BL1), at least one of the first group of springs 21e (for example, a first spring 211e) expands, and at least another one of the first group of springs 21e (for example, a second spring 212e) contracts. Alternatively, two of the first group of springs 21e (for example, the first spring 211e and the second spring 212e) may tilt while contracting by different contraction amounts. Still alternatively, two of the first group of springs 21e (for example, the first spring 211e and the second spring 212e) may tilt while expanding by different expansion amounts.

In the examples illustrated in FIGs. 17 and 18, when the first surface 211a of the first electromagnet 21a comes into contact with the workpiece W, the first electromagnet 21a passively tilts with respect to the second electromagnet 21b. Therefore, no driver is required to tilt the first electromagnet 21a.

In the examples illustrated in FIGs. 17 and 18, when the workpiece W is released from the first electromagnet 21a, the orientation of the first electromagnet 21a returns to the default orientation with respect to the second electromagnet 21b due to the biasing force of the first group of springs 21e.

The first group of springs 21e may function as a suspension. More specifically, the shock caused by the first electromagnet 21a coming into contact with the workpiece W may be absorbed by the first group of springs 21e.

In the example illustrated in FIG. 17, the first group of springs 21e include the first spring 211e and the second spring 212e. As in the example illustrated in FIG. 19, the first group of springs 21e may include a third spring 213e. As in the example illustrated in FIG. 20, the first group of springs 21e may include a fourth spring 214e. When the first group of springs 21e include three or more springs (alternatively, four or more springs), the first electromagnet 21a can be smoothly tilted with respect to the second electromagnet 21b in any direction. The first group of springs 21e may include a plurality of springs disposed around the first shaft component 214c. The first group of springs 21e may include a plurality of springs disposed at an equal angular interval around the first shaft component 214c. In the example illustrated in FIG. 17, the first spring 211e is a coil spring, and the second spring 212e is a coil spring. Alternatively, the first spring 211e and the second spring 212e may be other types of springs.

As in the example illustrated in FIG. 19, the block BL (more specifically, the first block BL1) may have a first hole h1 formed therein to receive one end portion of the first spring 211e. The block BL (more specifically, the first block BL1) may have a second hole h2 formed therein to receive one end portion of the second spring 212e.

As in the examples illustrated in FIGs. 21 to 23, a part of the first support 21c (for example, the first fixing component 2140c) may be disposed to pass through an inner space SP1 of a spring 21f. In the example illustrated in FIG. 23, the spring 21f is a coil spring. Alternatively, the spring 21f may be another type of spring.

In the examples illustrated in FIGs. 21 and 22, the first attachment 21 includes the spring 21f. In the examples illustrated in FIGs. 21 and 22, the spring 21f is disposed between the first support 21c (for example, the first block BL1) and the first electromagnet 21a. In the examples illustrated in FIGs. 21 and 22, when the first electromagnet 21a tilts with respect to the second electromagnet 21b (alternatively, the first support 21c or the block BL), the spring 21f deforms. In the examples illustrated in FIGs. 21 to 23, as in the examples illustrated in FIGs. 17 to 20, the first electromagnet 21a can be passively tilted with respect to the second electromagnet 21b in any direction.

In the examples illustrated in FIGs. 17 to 22, a spring is interposed between the first electromagnet 21a and the first support 21c. Alternatively or additionally, rubber may be interposed between the first electromagnet 21a and the first support 21c. The rubber may function as a component in place of the above-described springs (21e, 21f). Alternatively or additionally, an air cushion may be interposed between the first electromagnet 21a and the first support 21c. The air cushion may function as a component in place of the above-described springs (21e, 21f).

In the example illustrated in FIG. 17 or 21, the first support 21c has a first recess portion 210c for receiving the upper end portion 210a of the first electromagnet 21a. The block BL (more specifically, the first block BL1) may have the first recess portion 210c for receiving the upper end portion 210a of the first electromagnet 21a.

In the example illustrated in FIG. 17 or 21, a first gap G1 enabling the tilting of the first electromagnet 21a is formed between an inner circumferential surface S1 of the first recess portion 210c and an outer circumferential surface U1 of the upper end portion 210a of the first electromagnet 21a. With the first gap G1, the first electromagnet 21a tilts smoothly. Furthermore, because the inner circumferential surface S1 of the first recess portion 210c faces the outer circumferential surface U1 of the upper end portion 210a of the first electromagnet 21a, foreign matter is less likely to enter the first recess portion 210c. The first gap G1 is, for example, an annular gap.

In the example illustrated in FIG. 17 or 21, the first support 21c includes the first shaft component 214c to which the first electromagnet 21a is attached and a first hole part 215c (see FIG. 24) through which the first shaft component 214c passes.

As in the example illustrated in FIG. 24, a second gap G2 enabling the tilting of the first electromagnet 21a may be formed between an inner circumferential surface S2 of the first hole part 215c and an outer circumferential surface U2 of the first shaft component 214c (for example, the outer circumferential surface U2 of the first spacer 2146c). With the second gap G2, the first electromagnet 21a tilts smoothly.

In the examples illustrated in FIGs. 24 and 25, the first shaft component 214c (for example, the first fixing component 2140c and/or the first spacer 2146c) is movable relative to the first hole part 215c in a direction parallel to a central axis AT1 of the first hole part 215c. In this case, when the first surface 211a of the first electromagnet 21a comes into contact with the workpiece W, the distance between the first surface 211a of the first electromagnet 21a and the attachment mounting surface 31a (see FIG. 16) is automatically adjusted to an appropriate distance.

In the example illustrated in FIG. 17, the first electromagnet 21a includes a first coil 218a to which current is supplied from the first cable 291a, and a first yoke 219a surrounding the first coil 218a. The first electromagnet 21a may include a coating layer disposed on the surface of the first electromagnet 21a. Any known electromagnet can be used as the first electromagnet 21a.

In the example illustrated in FIG. 17, the second electromagnet 21b includes a second coil 218b to which current is supplied from the second cable 291b, and a second yoke 219b surrounding the second coil 218b. The second electromagnet 21b may include a coating layer disposed on the surface of the second electromagnet 21b. Any known electromagnet can be used as the second electromagnet 21b.

The first electromagnet 21a can be switched between an ON state to be capable of attracting the workpiece W and an OFF state to be not capable of attracting the workpiece W. When current is supplied to the first electromagnet 21a, the first electromagnet 21a is excited. In the example illustrated in FIG. 16, the workpiece transfer hand 1A is provided with the first cable 291a for supplying current to the first electromagnet 21a.

When the workpiece W is attached to the first attachment 21, current is supplied to the first electromagnet 21a through the first cable 291a. Power is supplied to the first electromagnet 21a, causing the first attachment 21 to attract the workpiece W. When the workpiece W is detached from the first attachment 21, the power supply to the first electromagnet 21a is stopped.

The second electromagnet 21b can be switched between an ON state to be capable of attracting the plate 3 and an OFF state to be not capable of attracting the plate 3. When current is supplied to the second electromagnet 21b, the second electromagnet 21b is excited. In the example illustrated in FIG. 16, the workpiece transfer hand 1A is provided with the second cable 291b for supplying current to the second electromagnet 21b.

When the first attachment 21 is attached to the plate 3, current is supplied to the second electromagnet 21b through the second cable 291b. Power is supplied to the second electromagnet 21b, causing the first attachment 21 to be attracted to the plate 3. When the first attachment 21 is detached from the plate 3, the power supply to the second electromagnet 21b is stopped.

In the example illustrated in FIG. 30, the plate 3 has a first through-hole part 341h formed through which the first cable 291a and the second cable 291b pass.

In the example illustrated in FIG. 30, when the first attachment 21 is detached from the plate 3, the first cable 291a and the second cable 291b can be led out from the first through-hole part 341h in the first direction DR1. Therefore, these cables can be easily slackened when the first attachment 21 is detached from the plate 3.

In the example illustrated in FIG. 30, when the first attachment 21 is attached to the plate 3, the first cable 291a and the second cable 291b can be pulled in the second direction DR2 from the first through-hole part 341h. Therefore, the slack of these cables can be easily reduced when the first attachment 21 is attached to the plate 3.

In the example illustrated in FIG. 31, the workpiece transfer hand 1B includes a first puller 421 that pulls the first cable 291a and the second cable 291b. More specifically, the first puller 421 pulls the first cable 291a and the second cable 291b in the second direction DR2 through the first through-hole part 341h. The first puller 421 may include a first motor 421m that pulls the first cable 291a and the second cable 291b, or may include a fluid pressure cylinder that pulls the first cable 291a and the second cable 291b.

### (Second Attachment 22)

As in the examples illustrated in FIGs. 26 and 27, the second attachment 22 includes: (1) the third electromagnet 22a that includes the third surface 221a coming into contact with the workpiece W and is capable of attracting the workpiece W; and (2) the fourth electromagnet 22b that includes the fourth surface 221b coming into contact with the plate 3 and is capable of attracting the plate 3.

As in the examples illustrated in FIGs. 26 and 27, the third electromagnet 22a is tiltable with respect to the fourth electromagnet 22b. Tilting the third electromagnet 22a can reduce the tilting of the third surface 221a of the third electromagnet 22a with respect to the attracted surface of the workpiece W (more specifically, the upper surface Wu of the workpiece W). More specifically, when the third surface 221a of the third electromagnet 22a is inclined with respect to the attracted surface of the workpiece W, the third surface 221a and the third electromagnet 22a tilt with respect to the attracted surface of the workpiece W. Tilting the third surface 221a and the third electromagnet 22a with respect to the attracted surface of the workpiece W allows the second attachment 22 (more specifically, the third electromagnet 22a) to more reliably attract the workpiece W.

In the example illustrated in FIG. 26, the second attachment 22 includes a second support 22c attached to the fourth electromagnet 22b. The second support 22c tiltably supports the third electromagnet 22a.

The second support 22c electrically insulates the third electromagnet 22a from the fourth electromagnet 22b.

In the example illustrated in FIG. 26, the second support 22c includes the block BK disposed between the third electromagnet 22a and the fourth electromagnet 22b. The block BK is, for example, made of an electrically insulating material.

As in the example illustrated in FIG. 26, the second support 22c may include a third block BK1 disposed between the third electromagnet 22a and the fourth electromagnet 22b, a fourth block BK2 disposed between the third block BK1 and the fourth electromagnet 22b, and a fixing component 223c that fixes the third block BK1 to the fourth block BK2. In the example illustrated in FIG. 26, the third block BK1 supports the third electromagnet 22a, and the fourth block BK2 supports the fourth electromagnet 22b. When the second support 22c includes the third block BK1, the fourth block BK2, and the fixing component 223c, the second attachment 22 can be easily assembled.

The third block BK1 is, for example, made of an electrically insulating material. The fourth block BK2 is, for example, made of an electrically insulating material.

As in the example illustrated in FIG. 26, the second support 22c may include a second shaft component 224c attached to the third electromagnet 22a. In the example illustrated in FIG. 26, the second shaft component 224c couples the third electromagnet 22a to the second support 22c. The second shaft component 224c may couple the third electromagnet 22a to the block BK (more specifically, the third block BK1). In the example illustrated in FIG. 26, the second shaft component 224c is attached to a center portion of an upper end portion 220a of the third electromagnet 22a.

In the example illustrated in FIG. 26, the second shaft component 224c includes a second fixing component 2240c (more specifically, a second bolt 2241c) attached to the third electromagnet 22a.

The second shaft component 224c may include a second spacer 2246c into which the second fixing component 2240c is inserted. The second spacer 2246c may, for example, have a cylindrical shape. In the example illustrated in FIG. 26, the second spacer 2246c is inserted into a second hole part 225c formed in the second support 22c (more specifically, the block BK). As in the example illustrated in FIG. 26, the second spacer 2246c may be a component defining the distance between the upper surface of the third electromagnet 22a and the head of the second bolt 2241c. The second spacer 2246c may be omitted.

As in the example illustrated in FIG. 26, the second support 22c may include a fixing component 227c (for example, a bolt) that fixes the second support 22c to the fourth electromagnet 22b. In the example illustrated in FIG. 26, the fixing component 227c fixes the second support 22c to the fourth electromagnet 22b so that the second support 22c is not tiltable with respect to the fourth electromagnet 22b. Alternatively, the second support 22c may be tiltable with respect to the fourth electromagnet 22b.

In the example illustrated in FIG. 26, the second attachment 22 includes a second group of springs 22e. In the examples illustrated in FIGs. 26 and 27, when the third electromagnet 22a tilts with respect to the fourth electromagnet 22b, the second group of springs 22e deform.

In the examples illustrated in FIGs. 26 and 27, when the third surface 221a of the third electromagnet 22a comes into contact with the workpiece W, the second group of springs 22e expand and contract. As a result, the third surface 221a of the third electromagnet 22a can be aligned with the attracted surface of the workpiece W (more specifically, the upper surface Wu of the workpiece W).

In the example illustrated in FIG. 26, the second group of springs 22e are disposed between the second support 22c and the third electromagnet 22a. As in the example illustrated in FIG. 26, the second group of springs 22e may be disposed between the block BK (more specifically, the third block BK1) and the third electromagnet 22a.

In the examples illustrated in FIGs. 26 and 27, when the third electromagnet 22a tilts with respect to the second support 22c (more specifically, the third block BK1), at least one of the second group of springs 22e (for example, a fifth spring 221e) expands, and at least another one of the second group of springs 22e (for example, a sixth spring 222e) contracts. Alternatively, two of the second group of springs 22e (for example, the fifth spring 221e and the sixth spring 222e) may tilt while contracting by different contraction amounts. Still alternatively, two of the second group of springs 22e (for example, the fifth spring 221e and the sixth spring 222e) may tilt while expanding by different expansion amounts.

In the examples illustrated in FIGs. 26 and 27, when the third surface 221a of the third electromagnet 22a comes into contact with the workpiece W, the third electromagnet 22a passively tilts with respect to the fourth electromagnet 22b. Therefore, no driver is required to tilt the third electromagnet 22a.

In the examples illustrated in FIGs. 26 and 27, when the workpiece W is released from the third electromagnet 22a, the orientation of the third electromagnet 22a with respect to the fourth electromagnet 22b returns to the default orientation due to the biasing force of the second group of springs 22e.

The second group of springs 22e may function as a suspension. More specifically, the shock caused by the third electromagnet 22a coming into contact with the workpiece W may be absorbed by the second group of springs 22e.

In the example illustrated in FIG. 26, the second group of springs 22e include the fifth spring 221e and the sixth spring 222e. The number of springs included in the second group of springs 22e may be three, four, or five or more. As in the example illustrated in FIG. 26, the second group of springs 22e may include a plurality of springs disposed around the second shaft component 224c. The second group of springs 22e may include a plurality of springs disposed at an equal angular interval around the second shaft component 224c. In the example illustrated in FIG. 26, the fifth spring 221e is a coil spring, and the sixth spring 222e is a coil spring. Alternatively, the fifth spring 221e and the sixth spring 222e may be other types of springs.

As in the example illustrated in FIG. 26, the block BK (more specifically, the third block BK1) may have a third hole h3 formed therein to receive one end portion of the fifth spring 221e. The block BK (more specifically, the third block BK1) may have a fourth hole h4 formed therein to receive one end portion of the sixth spring 222e.

As in the example illustrated in FIG. 28, a portion of the second support 22c (for example, the second shaft component 224c) may be disposed to pass through an inner space SP2 of a spring 22f. In the example illustrated in FIG. 28, the spring 22f is a coil spring. Alternatively, the spring 22f may be another type of spring.

In the example illustrated in FIG. 28, the second attachment 22 includes the spring 22f disposed between the second support 22c (for example, the third block BK1) and the third electromagnet 22a. In the example illustrated in FIG. 28, when the third electromagnet 22a tilts with respect to the second support 22c (more specifically, the block BK), the spring 22f is deformed.

In the examples illustrated in FIGs. 26 to 28, a spring is interposed between the third electromagnet 22a and the second support 22c. Alternatively or additionally, rubber may be interposed between the third electromagnet 22a and the second support 22c. The rubber may function as a component in place of the above-described springs (22e, 22f). Alternatively or additionally, an air cushion may be interposed between the third electromagnet 22a and the second support 22c. The air cushion may function as a component in place of the above-described springs (22e, 22f).

In the example illustrated in FIG. 26 or 28, the second support 22c has a second recess portion 220c for receiving the upper end portion 220a of the third electromagnet 22a. The block BK (more specifically, the third block BK1) may have the second recess portion 220c for receiving the upper end portion 220a of the third electromagnet 22a.

In the example illustrated in FIG. 26 or 28, a third gap G3 enabling the tilting of the third electromagnet 22a is formed between an inner circumferential surface S3 of the second recess portion 220c and an outer circumferential surface U3 of the upper end portion 220a of the third electromagnet 22a. The third gap G3 is, for example, an annular gap.

In the example illustrated in FIG. 26 or 28, the second support 22c includes the second shaft component 224c to which the third electromagnet 22a is attached and the second hole part 225c (see FIG. 29) through which the second shaft component 224c passes.

As in the example illustrated in FIG. 29, a fourth gap G4 enabling the tilting of the third electromagnet 22a may be formed between an inner circumferential surface S4 of the second hole part 225c and an outer circumferential surface U4 of the second shaft component 224c (for example, the outer circumferential surface U4 of the second spacer 2246c).

In the example illustrated in FIG. 29, the second shaft component 224c (for example, the second fixing component 2240c and/or the second spacer 2246c) is movable relative to the second hole part 225c in a direction parallel to a central axis AT2 of the second hole part 225c. In this case, when the third surface 221a of the third electromagnet 22a comes into contact with the workpiece W, the distance between the third surface 221a of the third electromagnet 22a and the attachment mounting surface 31a (see FIG. 27) is automatically adjusted to an appropriate distance.

In the example illustrated in FIG. 26, the third electromagnet 22a includes a third coil 228a to which current is supplied from the third cable 292a, and a third yoke 229a surrounding the third coil 228a. The third electromagnet 22a may include a coating layer disposed on the surface of the third electromagnet 22a. Any known electromagnet can be used as the third electromagnet 22a.

In the example illustrated in FIG. 26, the fourth electromagnet 22b includes a fourth coil 228b to which current is supplied from the fourth cable 292b, and a fourth yoke 229b surrounding the fourth coil 228b. The fourth electromagnet 22b may include a coating layer disposed on the surface of the fourth electromagnet 22b. Any known electromagnet can be used as the fourth electromagnet 22b.

The third electromagnet 22a can be switched between an ON state to be capable of attracting the workpiece W and an OFF state to be not capable of attracting the workpiece W. When current is supplied to the third electromagnet 22a, the third electromagnet 22a is excited. In the example illustrated in FIG. 30, the workpiece transfer hand 1A is provided with the third cable 292a for supplying current to the third electromagnet 22a.

When the workpiece W is attached to the second attachment 22, current is supplied to the third electromagnet 22a through the third cable 292a. Power is supplied to the third electromagnet 22a, causing the second attachment 22 to attract the workpiece W. When the workpiece W is detached from the second attachment 22, the power supply to the third electromagnet 22a is stopped.

The fourth electromagnet 22b can be switched between an ON state to be capable of attracting the plate 3 and an OFF state to be not capable of attracting the plate 3. When current is supplied to the fourth electromagnet 22b, the fourth electromagnet 22b is excited. In the example illustrated in FIG. 30, the workpiece transfer hand 1A is provided with the fourth cable 292b for supplying current to the fourth electromagnet 22b.

When the second attachment 22 is attached to the plate 3, current is supplied to the fourth electromagnet 22b through the fourth cable 292b. Power is supplied to the fourth electromagnet 22b, causing the second attachment 22 to be attracted to the plate 3. When the second attachment 22 is detached from the plate 3, the power supply to the fourth electromagnet 22b is stopped.

In the example illustrated in FIG. 30, the plate 3 has a second through-hole part 342h through which the third cable 292a and the fourth cable 292b pass.

In the example illustrated in FIG. 30, when the second attachment 22 is detached from the plate 3, the third cable 292a and the fourth cable 292b can be led out from the second through-hole part 342h in the first direction DR1. Therefore, these cables can be easily slackened when the second attachment 22 is detached from the plate 3.

In the example illustrated in FIG. 30, when the second attachment 22 is attached to the plate 3, the third cable 292a and the fourth cable 292b can be pulled in the second direction DR2 from the second through-hole part 342h. Therefore, the slack of these cables can be easily reduced when the second attachment 22 is attached to the plate 3.

In the example illustrated in FIG. 31, the workpiece transfer hand 1B includes a second puller 422 that pulls the third cable 292a and the fourth cable 292b. More specifically, the second puller 422 pulls the third cable 292a and the fourth cable 292b in the second direction DR2 through the second through-hole part 342h. The second puller 422 may include a second motor 422m that pulls the third cable 292a and the fourth cable 292b, or may include a fluid pressure cylinder that pulls the third cable 292a and the fourth cable 292b.

In the examples illustrated in FIGs. 26 and 27, the distance between the first electromagnet 21a and the second electromagnet 21b is variable. Furthermore, the distance between the third electromagnet 22a and the fourth electromagnet 22b is variable. In the examples illustrated in FIGs. 26 and 27, the first electromagnet 21a is tiltable with respect to the second electromagnet 21b, the distance between the first electromagnet 21a and the second electromagnet 21b is variable, the third electromagnet 22a is tiltable with respect to the fourth electromagnet 22b, and the distance between the third electromagnet 22a and the fourth electromagnet 22b is variable. Therefore, even if there is deflection of the workpiece W, warpage of the components supporting the workpiece W, manufacturing errors in the first attachment 21, deflection of the plate 3, or the like, both the first surface 211a of the first electromagnet 21a and the third surface 221a of the third electromagnet 22a can be aligned with the attracted surface of the workpiece W (more specifically, the upper surface Wu of the workpiece W). Thus, failure to attract the workpiece W by the first attachment 21 and the second attachment 22 is less likely to occur.

In the example illustrated in FIG. 26, the first electromagnet 21a is linearly movable relative to the second electromagnet 21b in a direction along a central axis AT3 of the first attachment 21. In the examples illustrated in FIGs. 24 and 25, when the first shaft component 214c attached to the first electromagnet 21a moves relative to the first hole part 215c of the first support 21c along the central axis AT1 of the first hole part 215c, the first electromagnet 21a linearly moves relative to the second electromagnet 21b in the direction along the central axis AT3 of the first attachment 21.

In the example illustrated in FIG. 26, the third electromagnet 22a is linearly movable relative to the fourth electromagnet 22b in a direction along a central axis AT4 of the second attachment 22. In the example illustrated in FIG. 29, when the second shaft component 224c attached to the third electromagnet 22a moves relative to the second hole part 225c of the second support 22c along the central axis AT2 of the second hole part 225c, the third electromagnet 22a linearly moves relative to the fourth electromagnet 22b in the direction along the central axis AT4 of the second attachment 22.

The configuration enabling the first electromagnet 21a to tilt with respect to the second electromagnet 21b and the distance between the first electromagnet 21a and the second electromagnet 21b to be variable is not limited to the examples illustrated in FIGs. 26 and 27. For example, the above-described configuration may be realized by a telescopic universal joint. The configuration enabling the third electromagnet 22a to tilt with respect to the fourth electromagnet 22b and the distance between the third electromagnet 22a and the fourth electromagnet 22b to be variable is not limited to the examples illustrated in FIGs. 26 and 27. For example, the above-described configuration may be realized by a telescopic universal joint.

### (Third Attachment 23)

In the example illustrated in FIG. 30, the plurality of attachments 2 include the third attachment 23. The third attachment 23 includes the fifth electromagnet 23a capable of attracting a workpiece and the sixth electromagnet 23b capable of attracting the plate 3. In the example illustrated in FIG. 30, the workpiece transfer hand 1B includes the fifth cable 293a for supplying current to the fifth electromagnet 23a and the sixth cable 293b for supplying current to the sixth electromagnet 23b.

The structure of the third attachment 23 may be similar to that of the first attachment 21. For the description of the structure of the third attachment 23, the description of the structure of the first attachment 21 shall be cited, and the redundant description will be omitted.

### (Fourth Attachment 24)

In the example illustrated in FIG. 30, the plurality of attachments 2 include a fourth attachment 24. The fourth attachment 24 includes a seventh electromagnet 24a capable of attracting a workpiece and an eighth electromagnet 24b capable of attracting the plate 3. In the example illustrated in FIG. 30, the workpiece transfer hand 1B includes a seventh cable 294a for supplying current to the seventh electromagnet 24a and an eighth cable 294b for supplying current to the eighth electromagnet 24b.

The structure of the fourth attachment 24 may be similar to that of the first attachment 21. For the description of the structure of the fourth attachment 24, the description of the structure of the first attachment 21 shall be cited, and the redundant description will be omitted.

### (Fifth Attachment 25)

In the example illustrated in FIG. 31, the plurality of attachments 2 include a fifth attachment 25. The fifth attachment 25 includes a ninth electromagnet 25a capable of attracting a workpiece and a tenth electromagnet 25b capable of attracting the plate 3. In the example illustrated in FIG. 31, the workpiece transfer hand 1B includes a ninth cable 295a for supplying current to the ninth electromagnet 25a and a tenth cable 295b for supplying current to the tenth electromagnet 25b.

The structure of the fifth attachment 25 may be the similar to that of the first attachment 21. For the description of the structure of the fifth attachment 25, the description of the structure of the first attachment 21 shall be cited, and the redundant description will be omitted.

### (Sixth Attachment 26)

In the example illustrated in FIG. 34, the plurality of attachments 2 include a sixth attachment 26. The sixth attachment 26 includes an eleventh electromagnet 26a capable of attracting a workpiece and a twelfth electromagnet 26b capable of attracting the plate 3. In the example illustrated in FIG. 34, the workpiece transfer hand 1B includes an eleventh cable 296a for supplying current to the eleventh electromagnet 26a and a twelfth cable 296b for supplying current to the twelfth electromagnet 26b.

The structure of the sixth attachment 26 may be the similar to that of the first attachment 21. For the description of the structure of the sixth attachment 26, the description of the structure of the first attachment 21 shall be cited, and the redundant description will be omitted.

### (Seventh Attachment 27)

In the example illustrated in FIG. 31, the plurality of attachments 2 include a seventh attachment 27. The seventh attachment 27 includes a thirteenth electromagnet 27a capable of attracting a workpiece and a fourteenth electromagnet 27b capable of attracting the plate 3. In the example illustrated in FIG. 31, the workpiece transfer hand 1B includes a thirteenth cable 297a for supplying current to the thirteenth electromagnet 27a and a fourteenth cable 297b for supplying current to the fourteenth electromagnet 27b.

The structure of the seventh attachment 27 may be the similar to that of the first attachment 21. For the description of the structure of the seventh attachment 27, the description of the structure of the first attachment 21 shall be cited, and the redundant description will be omitted.

### (Eighth Attachment 28)

In the example illustrated in FIG. 16, the plurality of attachments 2 include an eighth attachment 28. The eighth attachment 28 includes a fifteenth electromagnet 28a capable of attracting a workpiece and a sixteenth electromagnet 28b capable of attracting the plate 3. In the example illustrated in FIG. 16, the workpiece transfer hand 1B includes a fifteenth cable 298a for supplying current to the fifteenth electromagnet 28a and a sixteenth cable 298b for supplying current to the sixteenth electromagnet 28b.

The structure of the eighth attachment 28 may be the similar to that of the first attachment 21. For the description of the structure of the eighth attachment 28, the description of the structure of the first attachment 21 shall be cited, and the redundant description will be omitted.

### (Number of Attachments 2)

In the example illustrated in FIG. 16, the number of attachments 2, which are attachable to the plate 3 and are capable of attracting a workpiece, is eight. Alternatively, the number of attachments 2 may be three, four, five, six, seven, nine, or ten. Still alternatively, the number of attachments 2 may be 11 to 20, or 21 to 30. Yet still alternatively, the number of attachments 2 may be 31 or more.

### (Attachment and Detachment of Attachments 2 to and from Plate 3)

As in the example illustrated in FIG. 32, each of the plurality of attachments 2 is independently detachable from the plate 3.

As in the example illustrated in FIG. 33, the plurality of attachments 2 are attachable to the plate 3 in the first layout LA1. As in the example illustrated in FIG. 34, the plurality of attachments 2 are reattachable to the plate 3 in the second layout LA2 different from the first layout LA1.

### (Workpiece transfer device 10B)

In the example illustrated in FIG. 35, the workpiece transfer device 10B includes the workpiece transfer hand 1B and the hand traveling device 11 that moves the workpiece transfer hand 1B.

As in the example illustrated in FIG. 35, the hand traveling device 11 may include a multi-joint robot 11a. In the example illustrated in FIG. 35, the workpiece transfer hand 1B is attached to a leading end arm 115a of the multi-joint robot 11a.

In the example illustrated in FIG. 35, the multi-joint robot 11a includes a plurality of arms AM, a plurality of joints JT, and a plurality of arm drivers that move the plurality of joints JT (for example, a plurality of motors MT that move the plurality of joints JT). The multi-joint robot 11a has, for example, at least six rotation axes.

When the hand traveling device 11 includes the multi-joint robot 11a, there are fewer restrictions on the path of travel of the workpiece transfer hand 1B. Therefore, as in the example illustrated in FIG. 36, the positions of platforms such as the second platform 13a can be freely set.

As in the example illustrated in FIG. 36, the hand traveling device 11 may include a robot traveling device 11b that moves the multi-joint robot 11a entirely. The robot traveling device 11b moves the multi-joint robot 11a in a direction parallel to the horizontal plane. In the example illustrated in FIG. 36, the robot traveling device 11b moves the multi-joint robot 11a in a direction along the X axis, which is parallel to the horizontal plane.

When the hand traveling device 11 includes the robot traveling device 11b, the reachable range of the workpiece transfer hand 1B is increased. Therefore, as in the example illustrated in FIG. 36, the positions of platforms such as the second platform 13a can be set more freely.

### (Plate 3)

The plate 3 is, for example, a ferromagnetic material that attracts the second electromagnet 21b when energized. The plate 3 is mainly composed of, for example, iron. As in the example illustrated in FIG. 16, the plate 3 has the attachment mounting surface 31a to which the plurality of attachments 2 are attached. In the example illustrated in FIG. 16, the plate 3 has a first main surface 31. The first main surface 31 is the surface of the plate 3 directed in the first direction DR1. In the example illustrated in FIG. 16, the first main surface 31 includes the attachment mounting surface 31a.

As in the example illustrated in FIG. 37, an attachable region RG1 to which any one of the plurality of attachments can be attached may be provided around a central region RG2 of the plate 3. The attachable region RG1, to which any one of the plurality of attachments can be attached, may be continuously present 360 degrees around the central region RG2 of the plate 3.

In the example illustrated in FIG. 37, the plate 3 has a flat surface 311a to which the plurality of attachments 2 are attached. The plurality of attachments 2 can be attached to the flat surface 311a in a non-engaging manner.

### (Plate Supporter 4)

In the example illustrated in FIG. 35, the workpiece transfer hand 1B includes the plate supporter 4 that supports the plate 3. In the example illustrated in FIG. 35, the plate supporter 4 includes the attachment portion 41 that is attachable to the hand traveling device 11. With the hand traveling device 11 moving the workpiece transfer hand 1A, the workpiece W attracted by the plurality of attachments 2 is conveyed.

In the example illustrated in FIG. 35, the plate supporter 4 is attached to a central region of the back surface 33 of the plate 3. In the example illustrated in FIG. 35, the plate supporter 4 extends in a direction perpendicular to the plate 3. In the example illustrated in FIG. 35, the plate supporter 4 has a substantially pillar shape.

The plate supporter 4 may include an attachment plate 42 disposed along the back surface 33 of the plate 3. The attachment plate 42 is attached to the plate 3 via a plurality of bolts BT1 (see FIG. 37). The attachment plate 42 may support the above-described first puller 421.

### (Fixing of Plate 3 to Plate Supporter 4)

In the example illustrated in FIG. 37, the plate 3 is fixed to the plate supporter 4 (see FIG. 35) by the plurality of bolts BT1. In the example illustrated in FIG. 37, the central region RG2 of the plate 3 is fixed to the plate supporter 4 by the plurality of bolts BT1. The central region RG2 of the plate 3 may be set as a region where the attachments 2 are not disposed. In the example illustrated in FIG. 37, a stationary electromagnet 510, described below, is fixed to the central region RG2 of the plate 3. In the example illustrated in FIG. 37, the central region RG2 of the plate 3 has the above-described first through-hole part 341h and the above-described second through-hole part 342h.

### (Stationary Electromagnet 510)

As in the example illustrated in FIG. 16, the workpiece transfer hand 1B may include the stationary electromagnet 510 capable of attracting the workpiece W. The stationary electromagnet 510 is permanently fixed to the plate 3.

When the workpiece transfer hand 1B includes the stationary electromagnet 510 permanently fixed to the plate 3, the time required to change the layout of the plurality of electromagnets is reduced compared with a case where all the electromagnets are disposed in the attachments 2. For example, the plurality of attachments 2 may be attached around the stationary electromagnet 510 based on the position of the stationary electromagnet 510.

In the example illustrated in FIG. 16, the stationary electromagnet 510 is disposed in a center portion of the plate 3. More specifically, the stationary electromagnet 510 is disposed on a central axis C2 of the plate supporter 4 supporting the plate 3.

In the example illustrated in FIG. 30, the workpiece transfer hand 1B includes a cable 511 for feeding power to the stationary electromagnet 510.

### (Movable Electromagnet 530)

As in the example illustrated in FIG. 38, the workpiece transfer hand 1B may include the movable electromagnet 530 capable of attracting other workpieces (for example, a small workpiece Ws that is smaller than the first workpiece W1) and an electromagnet mover 535. In the example illustrated in FIG. 38, the workpiece transfer hand 1B includes a cable 532 for feeding power to the movable electromagnet 530.

The electromagnet mover 535 moves the movable electromagnet 530 between a retracted position Q5 (see FIG. 31) and an advanced position Q6 (see FIG. 38).

In the example illustrated in FIG. 38, with the movable electromagnet 530 located at the advanced position Q6, the movable electromagnet 530 can release the small workpiece Ws. In the example illustrated in FIG. 38, the small workpiece Ws released from the movable electromagnet 530 is stacked on the workpiece W. In the example illustrated in FIG. 38, because the movable electromagnet 530 is located at the advanced position Q6, the attachment 2 does not interfere with the workpiece W when the small workpiece Ws is stacked on the workpiece W.

In the example illustrated in FIG. 38, the electromagnet mover 535 moves the movable electromagnet 530 in a direction intersecting the attachment mounting surface 31a. In the example illustrated in FIG. 38, the electromagnet mover 535 moves the movable electromagnet 530 in a direction perpendicular to the attachment mounting surface 31a.

As in the example illustrated in FIG. 38, the electromagnet mover 535 may include a fluid pressure cylinder 535s that moves the movable electromagnet 530. Alternatively, the electromagnet mover 535 may include a motor that moves the movable electromagnet 530.

### (Pulling Device 56)

In the example illustrated in FIG. 38, the workpiece transfer hand 1B includes a puller 56 that pulls the cable 532. When the cable 532 is pulled by the puller 56, the slack of the cable 532 is reduced. The puller 56 may include a motor 56m that pulls the cable 532, or may include a fluid pressure cylinder that pulls the cable 532.

### (Attachment Supporter 15)

In the example illustrated in FIG. 36, the workpiece transfer device 10B includes the attachment supporter 15 that supports the attachment 2, out of the plurality of attachments 2, that has been detached from the plate 3. The attachment supporter 15 may include a first supporter 15a that supports the first attachment 21 and a second supporter 15b that supports the second attachment 22.

In the example illustrated in FIG. 36, the attachment position of the first attachment 21 with respect to the plate 3 is changed by the movement of the workpiece transfer hand 1B relative to the first attachment 21 supported by the attachment supporter 15 (more specifically, the first supporter 15a). In the example illustrated in FIG. 36, the attachment position of the second attachment 22 with respect to the plate 3 is changed by the movement of the workpiece transfer hand 1B relative to the second attachment 22 supported by the attachment supporter 15 (more specifically, the second supporter 15b).

In the example illustrated in FIG. 36, the attachment position of each of the plurality of attachments 2 is changed using the workpiece transfer hand 1B, the hand traveling device 11, which moves the workpiece transfer hand 1B, and the attachment supporter 15. Therefore, there is no need to manually change the attachment position of each of the plurality of attachments 2. Thus, the operator is free of an increase in workload.

### (First Platform 12)

In the example illustrated in FIG. 36, the workpiece transfer device 10B includes the first platform 12 capable of supporting a plurality of workpieces including the first workpiece W1 and the second workpiece W2. The first platform 12 may include the first pallet PT1 on which the plurality of workpieces including the first workpiece W1 and the second workpiece W2 can be placed, and the first support stand 121 that supports the plurality of workpieces via the first pallet PT1.

The first support stand 121 may include a pallet mover 121b that moves a pallet (for example, the first pallet PT1). In the example illustrated in FIG. 36, the pallet mover 121b moves the first pallet PT1 in a direction parallel to the horizontal plane. In the example illustrated in FIG. 36, the pallet mover 121b moves the first pallet PT1 in a direction along the X axis, which is parallel to the horizontal plane.

In the example illustrated in FIG. 36, the hand traveling device 11 (more specifically, the multi-joint robot 11a and the robot traveling device 11b) can move the workpiece transfer hand 1B (more specifically, the plate 3) between a position to face the first platform 12 and a position to face the attachment supporter 15.

In the example illustrated in FIG. 36, the hand traveling device 11 (more specifically, the multi-joint robot 11a and the robot traveling device 11b) can move the workpiece transfer hand 1B (more specifically, the plate 3) between the position to face the first platform 12 and a position to face the second platform 13a.

In the example illustrated in FIG. 36, the hand traveling device 11 (more specifically, the multi-joint robot 11a and the robot traveling device 11b) can move the workpiece transfer hand 1B (more specifically, the plate 3) between the position to face the first platform 12 and a position to face the third platform 13b.

### (Second Platform 13a and Third Platform 13b)

As in the example illustrated in FIG. 36, the workpiece transfer device 10B may include the second platform 13a for receiving the workpiece W (for example, the first workpiece W1) conveyed by the workpiece transfer hand 1B. The second platform 13a may include the second pallet PT2 on which the workpiece W (for example, the first workpiece W1) can be placed, and the second support stand 131a that supports the workpiece W (for example, the first workpiece W1) via the second pallet PT2.

In the example illustrated in FIG. 36, the workpiece transfer device 10B can convey the workpiece W (for example, the first workpiece W1) from the first platform 12 to the second platform 13a.

The workpiece transfer device 10B may include the third platform 13b for receiving the workpiece W conveyed by the workpiece transfer hand 1B. The third platform 13b may include the third pallet PT3 on which the workpiece W can be placed, and the third support stand 131b that supports the workpiece W via the third pallet PT3.

In the example illustrated in FIG. 36, the workpiece transfer device 10B can convey the workpiece W from the first platform 12 to the third platform 13b.

The workpiece transfer device 10B may include a fourth platform 13c for receiving the workpiece W conveyed by the workpiece transfer hand 1B.

### (Workpiece W)

The workpiece W (for example, the first workpiece W1) is, for example, the plate workpiece Wa. More specifically, the plurality of attachments 2 disposed on plate 3 in the first layout LA1 can attract the plate workpiece Wa. Since the workpiece W has already been described in embodiment 1, the redundant description on the workpiece W will be omitted.

As in the example illustrated in FIG. 39, the workpiece W (for example, the first workpiece W1) may be a plate workpiece including a plurality of subparts PD connected to each other via fragile regions J. In other words, the workpiece W (for example, the first workpiece W1) may be dividable into the plurality of subparts PD. In the example illustrated in FIG. 39, a plurality of slits SL are formed in the workpiece W (for example, the first workpiece W1).

### (Second Workpiece W2)

The second workpiece W2 is, for example, the second plate workpiece Wb. The plurality of attachments 2 disposed on plate 3 in the second layout LA2 can attract the second plate workpiece Wb. Since the second workpiece W2 has already been described in embodiment 1, the redundant description on the second workpiece W2 will be omitted.

The second workpiece W2 may be a plate workpiece in which a plurality of subparts are connected via fragile regions. In other words, the second workpiece W2 may be dividable into the plurality of subparts.

### (Power supply unit 6)

As in the example illustrated in FIG. 40, the workpiece transfer device 10B includes a power supply unit 6 for supplying current to the first electromagnet 21a and the second electromagnet 21b. In the example illustrated in FIG. 40, the power supply unit 6 can supply current to the third electromagnet 22a and the fourth electromagnet 22b.

The power supply unit 6 may be capable of supplying current to the fifth electromagnet 23a and the sixth electromagnet 23b. The power supply unit 6 may also be capable of supplying current to the seventh electromagnet 24a and the eighth electromagnet 24b.

The power supply unit 6 may be capable of supplying current to the ninth electromagnet 25a and the tenth electromagnet 25b. The power supply unit 6 may also be capable of supplying current to the eleventh electromagnet 26a and the twelfth electromagnet 26b.

The power supply unit 6 may be capable of supplying current to the thirteenth electromagnet 27a and the fourteenth electromagnet 27b. The power supply unit 6 may also be capable of supplying current to the fifteenth electromagnet 28a and the sixteenth electromagnet 28b.

The power supply unit 6 may be capable of supplying current to the stationary electromagnet 510. Alternatively or additionally, the power supply unit 6 may be capable of supplying current to the movable electromagnet 530.

### (Controller 7)

In the example illustrated in FIG. 40, the workpiece transfer device 10B includes the controller 7 that controls the hand traveling device 11. The controller 7 also controls the attracting operation of each of the plurality of attachments 2. More specifically, the controller 7 controls the power supply unit 6, thereby controlling the attracting operation of each of the plurality of attachments 2.

For example, the controller 7 controls the attracting operation of the first attachment 21 (more specifically, the ON/OFF of the first electromagnet 21a and the ON/OFF of the second electromagnet 21b). More specifically, the controller 7 can control the power supply unit 6 to supply current to the first electromagnet 21a of the first attachment 21. When current is supplied to the first electromagnet 21a, the first electromagnet 21a is excited. When the first electromagnet 21a is excited, the first electromagnet 21a of the first attachment 21 attracts the workpiece W. The controller 7 can also control the power supply unit 6 to stop the supply of current to the first electromagnet 21a of the first attachment 21. When the supply of current to the first electromagnet 21a is stopped, the first electromagnet 21a is demagnetized. When the first electromagnet 21a is demagnetized, the workpiece W is released from the first attachment 21.

For example, the controller 7 can control the power supply unit 6 to supply current to the second electromagnet 21b of the first attachment 21. When current is supplied to the second electromagnet 21b, the second electromagnet 21b is excited. When the second electromagnet 21b is excited, the second electromagnet 21b of the first attachment 21 is attracted to the plate 3. The controller 7 can also control the power supply unit 6 to stop the supply of current to the second electromagnet 21b of the first attachment 21. When the supply of current to the second electromagnet 21b is stopped, the second electromagnet 21b is demagnetized. When the second electromagnet 21b is demagnetized, the first attachment 21 is released from the plate 3.

For example, the controller 7 controls the attracting operation of the second attachment 22 (more specifically, the ON/OFF of the third electromagnet 22a and the ON/OFF of the fourth electromagnet 22b). More specifically, the controller 7 can control the power supply unit 6 to supply current to the third electromagnet 22a of the second attachment 22. When current is supplied to the third electromagnet 22a, the third electromagnet 22a is excited. When the third electromagnet 22a is excited, the third electromagnet 22a of the second attachment 22 attracts the workpiece W. The controller 7 can also control the power supply unit 6 to stop the supply of current to the third electromagnet 22a of the second attachment 22. When the supply of current to the third electromagnet 22a is stopped, the third electromagnet 22a is demagnetized. When the third electromagnet 22a is demagnetized, the workpiece W is released from the second attachment 22.

For example, the controller 7 can control the power supply unit 6 to supply current to the fourth electromagnet 22b of the second attachment 22. When current is supplied to the fourth electromagnet 22b, the fourth electromagnet 22b is excited. When the fourth electromagnet 22b is excited, the fourth electromagnet 22b of the second attachment 22 is attracted to the plate 3. The controller 7 can also control the power supply unit 6 to stop the supply of current to the fourth electromagnet 22b of the second attachment 22. When the supply of current to the fourth electromagnet 22b is stopped, the fourth electromagnet 22b is demagnetized. When the fourth electromagnet 22b is demagnetized, the second attachment 22 is released from the plate 3.

Additionally, the controller 7 may control the attachment supporter 15.

A single computer may function as the controller 7, or multiple computers may cooperate to function as the controller 7. For example, the controller 7 may include a lower-level computer that controls the plurality of attachments 2 and the hand traveling device 11, and an upper-level computer that sends commands or data to the lower-level computer.

In the example illustrated in FIG. 40, the controller 7 includes a hardware processor 70 (hereinafter, simply referred to as the "processor 70"), a memory 72, a communication circuit 74, an inputter 76, and a display 77. The processor 70, the memory 72, the communication circuit 74, the inputter 76, and the display 77 are connected to each other via a bus 78. In the example illustrated in FIG. 40, the inputter 76 includes a touch panel 76t on the display 77. In other words, the display 77 is a display with the touch panel 76t. The inputter 76 may include buttons, switches, levers, a pointing device and/or a keyboard.

The memory 72 is a storage medium readable by the processor 70 of the controller 7. The memory 72 may be, for example, a non-volatile or volatile semiconductor memory such as RAM, ROM, and a flash memory, a magnetic disk, or a memory of another form.

The memory 72 stores data DT and a program PM. By the processor 70 of the controller 7 executing the program PM stored in the memory 72, the controller 7 generates a control instruction. The communication circuit 74 transmits this control instruction to control target devices (more specifically, the hand traveling device 11, the power supply unit 6, the attachment supporter 15, and the like). Thus, by the processor 70 executing the program PM, the controller 7 can control the control target devices (more specifically, the hand traveling device 11, the power supply unit 6, the attachment supporter 15, and the like).

### (First Position Change Mode M1-1)

As in the example illustrated in FIG. 6 or FIG. 41, the controller 7 can execute a first position change mode M1-1 by controlling the hand traveling device 11 and the attachment supporter 15. The first position change mode M1-1 is a mode under which the attachment position of the first attachment 21 with respect to the plate 3 is changed while the second attachment 22 is attached to the plate 3. In the example illustrated in FIG. 41, the first position change mode M1-1 includes changing the attachment position of the first attachment 21 with respect to the plate 3 from a first attachment position T1 to a second attachment position T2.

As in the example illustrated in FIG. 41, the first position change mode M1-1 may be executed with the third attachment 23 attached to the plate 3. As in the example illustrated in FIG. 41, the first position change mode M1-1 may be executed with the fourth attachment 24 attached to the plate 3.

The first position change mode M1-1 may include transmitting a first movement command from the controller 7 to the hand traveling device 11 to move the first attachment 21 to a position to face the attachment supporter 15 (more specifically, the first supporter 15a).

The first position change mode M1-1 may include transmitting a first raising command from the controller 7 to the lifting device 157 (more specifically, a first lifting device 157a of the first supporter 15a) to move the gripping component 151 (more specifically, a first gripping component 151a of the first supporter 15a) from a lowered position to a raised position. Note that if the gripping component 151 cannot be raised, the transmission of the first raising command is omitted.

The first position change mode M1-1 may include transmitting a first gripping command from the controller 7 to the gripping component mover 153 (more specifically, a first driver 153a of the first supporter 15a) to grip the first attachment 21 with the gripping component 151 (more specifically, the first gripping component 151a). The first position change mode M1-1 may also include transmitting a first demagnetization command from the controller 7 to the power supply unit 6 to demagnetize the second electromagnet 21b after the first attachment 21 is gripped with the gripping component 151 (more specifically, the first gripping component 151a).

The first position change mode M1-1 may include transmitting a second movement command from the controller 7 to the hand traveling device 11 to move the second attachment position T2 on the plate 3 to a position to face the first attachment 21.

The first position change mode M1-1 may include transmitting a first excitation command from the controller 7 to the power supply unit 6 to excite the second electromagnet 21b after the second attachment position T2 on the plate 3 is moved to the position to face the first attachment 21. The first position change mode M1-1 may include transmitting a first gripping release command from the controller 7 to the gripping component mover 153 (more specifically, the first driver 153a) to release the gripping of the first attachment 21 with the gripping component 151 (more specifically, the first gripping component 151a) after the second attachment position T2 on the plate 3 is moved to the position to face the first attachment 21.

The first position change mode M1-1 may include transmitting a first lowering command from the controller 7 to the lifting device 157 (more specifically, the first lifting device 157a) to move the gripping component 151 (more specifically, the first gripping component 151a) from the raised position to the lowered position after the first attachment 21 is attached to the second attachment position T2 on the plate 3. When the gripping component 151 cannot be lowered, the transmission of the first lowering command is omitted.

### (Second Position Change Mode M1-2)

As in the example illustrated in FIG. 8 or FIG. 42, the controller 7 can execute a second position change mode M1-2 by controlling the hand traveling device 11 and the attachment supporter 15. The second position change mode M1-2 is a mode under which the attachment position of the second attachment 22 with respect to the plate 3 is changed with the first attachment 21 attached to the plate 3. In the example illustrated in FIG. 42, the second position change mode M1-2 includes changing the attachment position of the second attachment 22 with respect to the plate 3 from a third attachment position T3 to a fourth attachment position T4.

As in the example illustrated in FIG. 42, the second position change mode M1-2 may be executed with the third attachment 23 attached to the plate 3. As in the example illustrated in FIG. 42, the second position change mode M1-2 may be executed with the fourth attachment 24 attached to the plate 3.

The second position change mode M1-2 may include transmitting a third movement command from the controller 7 to the hand traveling device 11 to move the second attachment 22 to a position to face the attachment supporter 15 (more specifically, the second supporter 15b).

The second position change mode M1-2 may include transmitting a second raising command from the controller 7 to the lifting device 157 (more specifically, a second lifting device 157b of the second supporter 15b) to move the gripping component 151 (more specifically, a second gripping component 151b of the second supporter 15b) from a lowered position to a raised position. When the gripping component 151 cannot be raised, the transmission of the second raising command is omitted.

The second position change mode M1-2 may include transmitting a second gripping command from the controller 7 to the gripping component mover 153 (more specifically, a second driver 153b of the second supporter 15b) to grip the second attachment 22 with the gripping component 151 (more specifically, the second gripping component 151b). The second position change mode M1-2 may also include transmitting a second demagnetization command from the controller 7 to the power supply unit 6 to demagnetize the fourth electromagnet 22b after the second attachment 22 is gripped with the gripping component 151 (more specifically, the second gripping component 151b).

The second position change mode M1-2 may include transmitting a fourth movement command from the controller 7 to the hand traveling device 11 to move the fourth attachment position T4 on the plate 3 to a position to face the second attachment 22.

The second position change mode M1-2 may include transmitting a second excitation command from the controller 7 to the power supply unit 6 to excite the fourth electromagnet 22b after the fourth attachment position T4 on the plate 3 is moved to the position to face the second attachment 22. The second position change mode M1-2 may include transmitting a second gripping release command from the controller 7 to the gripping component mover 153 (more specifically, the second driver 153b) to release the gripping of the second attachment 22 with the gripping component 151 (more specifically, the second gripping component 151b) after the fourth attachment position T4 on the plate 3 is moved to the position to face the second attachment 22.

The second position change mode M1-2 may include transmitting a second lowering command from the controller 7 to the lifting device 157 (more specifically, the second lifting device 157b) to move the gripping component 151 (more specifically, the second gripping component 151b) from the raised position to the lowered position after the second attachment 22 is attached to the fourth attachment position T4 on the plate 3. When the gripping component 151 cannot be lowered, the transmission of the second lowering command is omitted.

### (Third Position Change Mode M1-3)

As in the example illustrated in FIG. 9, the controller 7 may be capable of executing a third position change mode M1-3 under which the attachment position of the third attachment 23 with respect to the plate 3 is changed with the first attachment 21 and the second attachment 22 attached to the plate 3.

### (Layout Change Mode M1)

As in the examples illustrated in FIGs. 5 to 10 (or as in the examples illustrated in FIGs. 41 and 42), the controller 7 can execute a layout change mode M1 under which the hand traveling device 11 and the attachment supporter 15 are used to change the layout of the plurality of attachments 2 from the first layout LA1 to the second layout LA2.

The layout change mode M1 includes the above-described first position change mode M1-1 and the above-described second position change mode M1-2. The layout change mode M1 may also include the above-described third position change mode M1-3.

In this specification, "N" is defined as the number of attachments 2 required to have the attachment position to the plate 3 changed when the layout of the plurality of attachments 2 attached to the plate 3 is changed from the first layout LA1 to the second layout LA2.

The layout change mode M1 may include transmitting a control command from the controller 7 to the hand traveling device 11, the power supply unit 6, and the attachment supporter 15 to change the positions of the plurality of attachments 2 attached to the plate 3 in order.

More specifically, when "K" is defined as any natural number smaller than "N", the layout change mode M1 may include transmitting a control command from the controller 7 to the hand traveling device 11, the power supply unit 6, and the attachment supporter 15 to change the attachment position of the "K+1"-th attachment 2 to the plate 3 after the attachment position of the "K"-th attachment 2 to the plate 3 is changed.

The attachment position of the "K"-th attachment 2 to the plate 3 is changed by detaching the "K"-th attachment 2 from the plate 3 and reattaching the "K"-th attachment 2 to the plate 3. The attachment position of the "K+1"-th attachment 2 to the plate 3 is changed by detaching the "K+1"-th attachment 2 from the plate 3 and reattaching the "K+1"-th attachment 2 to the plate 3.

The layout change mode M1 may include changing the layout of the plurality of attachments 2 with respect to the plate 3 from the first layout LA1 conforming to the shape of the first workpiece W1 to the second layout LA2 conforming to the shape of the second workpiece W2, based on computer-aided design (CAD) data including shape data of the first workpiece W1 and shape data of the second workpiece W2.

Alternatively, layout change mode M1 may include changing the layout of the plurality of attachments 2 with respect to the plate 3 from the first layout LA1 conforming to the shape of the first workpiece W1 to the second layout LA2 conforming to the shape of the second workpiece W2, based on an instruction from a user. For example, when the user designates a reattachment position for the plurality of attachments 2 on the display 77 of the controller 7, the layout of the plurality of attachments 2 with respect to the plate 3 may be changed from the first layout LA1 conforming to the shape of the first workpiece W1 to the second layout LA2 conforming to the shape of second workpiece W2.

### (Sorting Mode M3)

The controller 7 may be capable of executing a sorting mode M3 under which a plurality of workpieces W are sorted into a plurality of groups by controlling the hand traveling device 11, the attachment supporter 15, and the attracting operation of each of the plurality of attachments 2.

FIG. 43 schematically illustrates how the plurality of workpieces W are sorted into a plurality of groups. Under the sorting mode M3, the plurality of workpieces W may be sorted into a plurality of groups based on the type of post processing. For example, under the sorting mode M3, the plurality of workpieces W may be sorted into a group that requires welding and a group that does not require welding. Alternatively or additionally, under the sorting mode M3, the plurality of workpieces W may be sorted into a group that requires bending and a group that does not require bending.

Alternatively or additionally, under the sorting mode M3, the plurality of workpieces W may be sorted into a group of a smaller size and a group of a larger size.

In the example illustrated in FIG. 43, the first workpiece W1 is classified as the first group. The first workpiece W1 classified as the first group is conveyed from the first platform 12 to one side portion 1311a of the second platform 13a. In the example illustrated in FIG. 43, the second workpiece W2 and a third workpiece W3 are classified as the second group. The second workpiece W2 and the third workpiece W3 classified as the second group are conveyed from the first platform 12 to another side portion 1312a of the second platform 13a.

In the example illustrated in FIG. 43, the first workpiece W1, the second workpiece W2, and the third workpiece W3 are classified as a third group. The first workpiece W1, the second workpiece W2, and the third workpiece W3 classified as the third group are conveyed from the first platform 12 to the second platform 13a. In the example illustrated in FIG. 43, a fourth workpiece W4 and a fifth workpiece W5 are classified as a fourth group. The fourth workpiece W4 and the fifth workpiece W5 classified as the fourth group are conveyed from the first platform 12 to the third platform 13b.

The sorting mode M3 may include conveying at least one workpiece (for example, the first workpiece W1), out of the plurality of workpieces W, that is classified as the first group from the first platform 12 to the one side portion 1311a of the second platform 13a (for example, one side portion of the second pallet PT2) using the hand traveling device 11. The sorting mode M3 may also include conveying at least one workpiece (for example, the second workpiece W2, the third workpiece W3), out of the plurality of workpieces W, that is classified as the second group from the first platform 12 to the other side portion 1312a of the second platform 13a (for example, the other side portion of the second pallet PT2) using the hand traveling device 11.

The sorting mode M3 may include conveying at least one workpiece (for example, the first workpiece W1, the second workpiece W2, the third workpiece W3), out of the plurality of workpieces W, that is classified as the third group from the first platform 12 to the second platform 13a (for example, the second pallet PT2) using the hand traveling device 11. The sorting mode M3 may also include conveying at least one workpiece (for example, the fourth workpiece W4, the fifth workpiece W5), out of the plurality of workpieces W, that is classified as the fourth group of W from the first platform 12 to the third platform 13b (for example, the third pallet PT3) using the hand traveling device 11.

In the example illustrated in FIG. 43, the first platform 12 supports a plurality of workpieces including the first workpiece W1 classified as the first group and the second workpiece W2 classified as the second group.

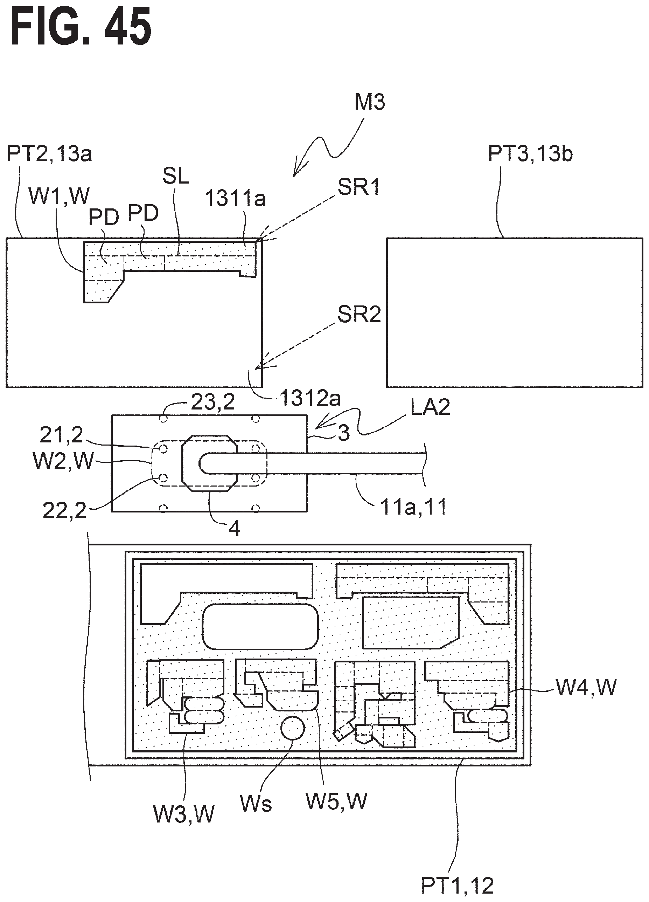

In the example illustrated in FIG. 44, the sorting mode M3 includes conveying the first workpiece W1 from the first platform 12 to a first sorting region SR1 using the hand traveling device 11, with the first workpiece W1 attracted by the plurality of attachments 2 attached to the plate 3 in the first layout LA1. In the example illustrated in FIG. 45, the first sorting region SR1 is a region on the second platform 13a (more specifically, the one side portion 1311a of the second platform 13a). The first workpiece W1 may be conveyed with the first workpiece W1 attracted by the plurality of attachments 2 and the stationary electromagnet 510 (see FIG. 16).

In the examples illustrated in FIGs. 41 and 42, the sorting mode M3 includes changing the layout of the plurality of attachments 2 from the first layout LA1 to the second layout LA2 using the hand traveling device 11 and the attachment supporter 15. More specifically, the sorting mode M3 includes a plurality of position change modes including the first position change mode M1-1 and the second position change mode M1-2. The first position change mode M1-1 and the second position change mode M1-2 have already been described, and the redundant description on the first position change mode M1-1 and the second position change mode M1-2 will be omitted.

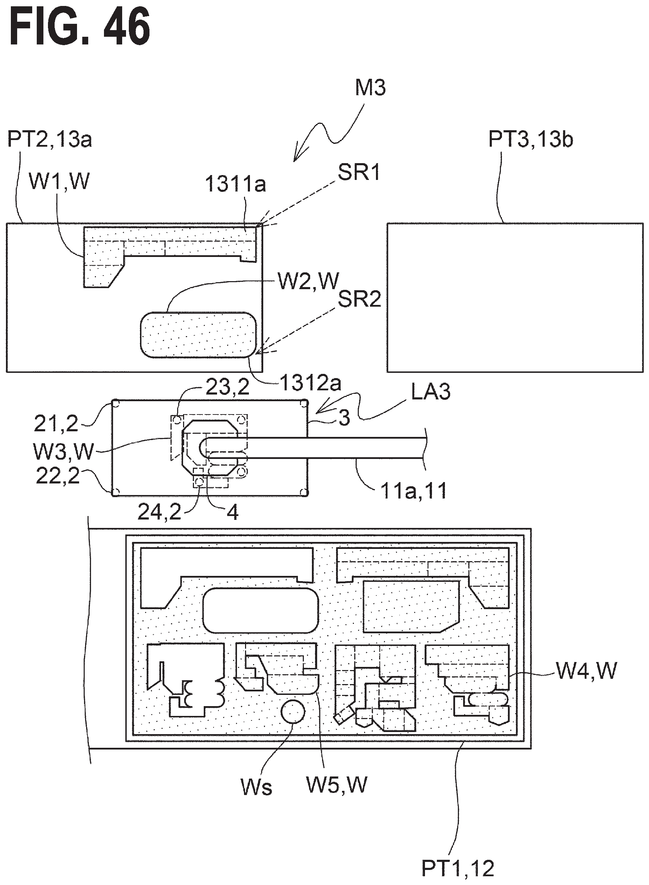

In the example illustrated in FIG. 45, the sorting mode M3 includes conveying the second workpiece W2 from the first platform 12 to a second sorting region SR2 using the hand traveling device 11, with the second workpiece W2 attracted by the plurality of attachments 2 attached to the plate 3 in the second layout LA2. In the example illustrated in FIG. 46, the second sorting region SR2 is the other side portion 1312a of the second platform 13a. Alternatively, the second sorting region SR2 may be a region on the third platform 13b. The second workpiece W2 may be conveyed with the second workpiece W2 attracted by the plurality of attachments 2 and the stationary electromagnet 510 (see FIG. 16).

The sorting mode M3 may include changing the layout of the plurality of attachments 2 from the second layout LA2 (see FIG. 45) to a third layout LA3 (see FIG. 46) using the hand traveling device 11 and the attachment supporter 15.

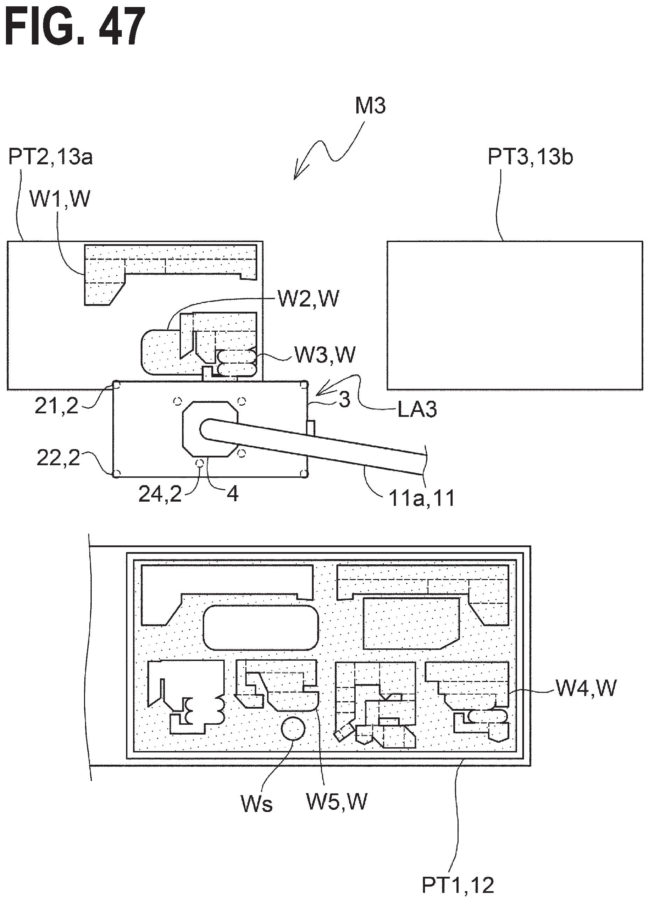

In the examples illustrated in FIGs. 46 and 47, the sorting mode M3 includes conveying the third workpiece W3 onto the first workpiece W1 or onto the second workpiece W2 using the hand traveling device 11, with the third workpiece W3 attracted by the plurality of attachments 2 attached to the plate 3 in the third layout LA3. With the third workpiece W3 stacked on top of the first workpiece W1 or the second workpiece W2, the area occupied by the plurality of workpieces W can be made small. The conveyance of the third workpiece W3 may be performed with the third workpiece W3 attracted by the plurality of attachments 2 and the stationary electromagnet 510 (see FIG. 16).

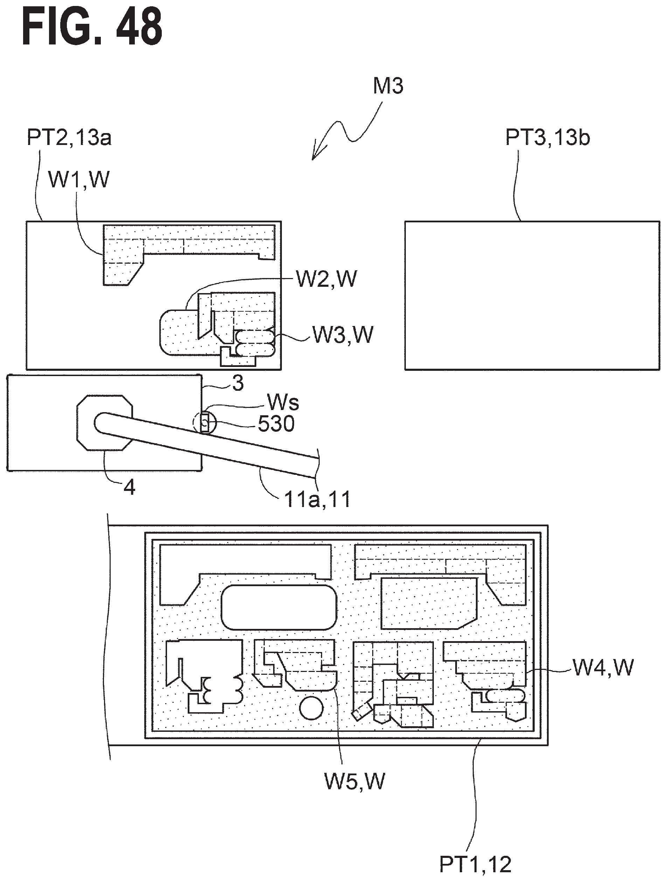

As in the example illustrated in FIG. 48, the sorting mode M3 may include conveying the small workpiece Ws onto the first workpiece W1 or onto the second workpiece W2 using the hand traveling device 11, with the small workpiece Ws attracted by the movable electromagnet 530.

### (Embodiment 3)

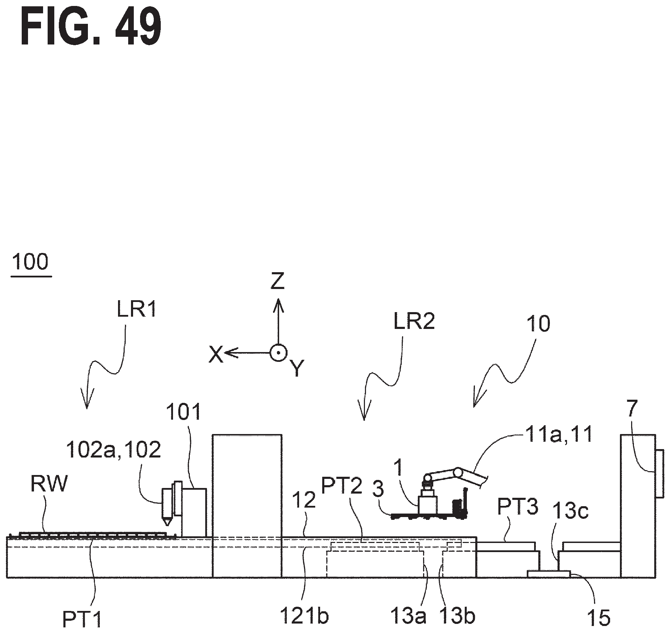

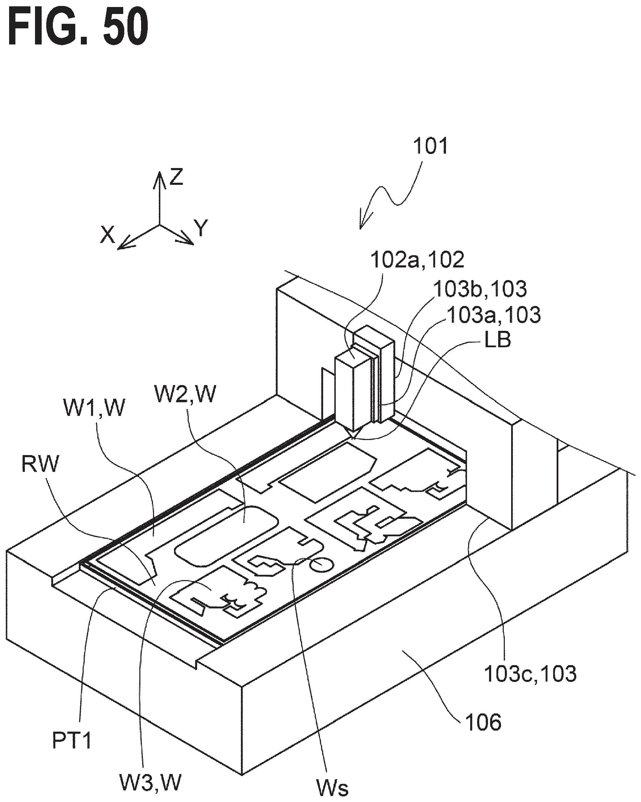

With reference to FIGs. 1 to 50, the laser beam machining system 100 according to embodiment 3 will be described. FIG. 49 is a schematic side view schematically illustrating the laser beam machining system 100 according to embodiment 3. FIG. 50 is a schematic perspective view illustrating a part of the laser beam machining system 100 according to embodiment 3.

In embodiment 3, differences from embodiment 1 and embodiment 2 will be mainly described. In embodiment 3, redundant description on what have been described in embodiment 1 or embodiment 2 will be omitted. Thus, it is a matter of course that what have been described in embodiment 1 or embodiment 2, which are not explicitly described in embodiment 3, can be applied to embodiment 3.

As in the example illustrated in FIG. 49, the laser beam machining system 100 according to embodiment 3 includes a laser beam machining apparatus 101 and the workpiece transfer device 10.

As in the example illustrated in FIG. 50, the laser beam machining apparatus 101 forms the plurality of workpieces W including the first workpiece W1 and the second workpiece W2 from a raw material workpiece RW by irradiating the raw material workpiece RW with a laser beam LB.

As in the example illustrated in FIG. 49, the workpiece transfer device 10 includes the workpiece transfer hand 1 and the hand traveling device 11 that moves the workpiece transfer hand 1. The workpiece transfer device 10 conveys the plurality of workpieces W. As in the example illustrated in FIG. 1 or FIG. 16, the workpiece transfer hand 1 includes the plurality of attachments 2 including the first attachment 21 capable of attracting the first workpiece W1 and the second attachment 22 capable of attracting the first workpiece W1, and the plate 3 to which each of the plurality of attachments 2 is attached by magnetic force.

The workpiece transfer device 10 may be the workpiece transfer device 10A according to embodiment 1, the workpiece transfer device 10B according to embodiment 2, or other workpiece transfer devices. The workpiece transfer hand 1 may be the workpiece transfer hand 1A according to embodiment 1, the workpiece transfer hand 1B according to embodiment 2, or other workpiece transfer hands. The workpiece transfer hand 1A according to embodiment 1, the workpiece transfer device 10A according to embodiment 1, the workpiece transfer hand 1B according to embodiment 2, and the workpiece transfer device 10B according to embodiment 2 are already described, and the redundant description on these will be omitted.

As in the example illustrated in FIG. 2 or FIG. 26, the first attachment 21 includes (1) the first electromagnet 21a that includes the first surface 211a coming into contact with the first workpiece W1 and is capable of attracting the first workpiece W1, and (2) the second electromagnet 21b that includes the second surface 211b coming into contact with the plate 3 and is capable of attracting the plate 3.

As in the examples illustrated in FIGs. 3 and 4 (or FIGs. 26 and 27), the first electromagnet 21a is tiltable with respect to the second electromagnet 21b.

Thus, the laser beam machining system 100 according to embodiment 3 provides the same effects as the workpiece transfer hand 1A according to embodiment 1, the workpiece transfer device 10A according to embodiment 1, the workpiece transfer hand 1B according to embodiment 2, or the workpiece transfer device 10B according to embodiment 2.

### (Optional Configurations)

Next, with reference to FIGs. 1 to 50, optional configurations that can be adopted in the laser beam machining system 100 according to embodiment 3 will be described.

### (Laser beam machining apparatus 101)

In the example illustrated in FIG. 50, the laser beam machining apparatus 101 includes a laser irradiator 102 including a laser head 102a, a head mover 103 that moves the laser head 102a, and a work supporter 106.

In the example illustrated in FIG. 50, the work supporter 106 supports a workpiece (for example, the raw material workpiece RW) via a pallet (for example, the first pallet PT1).

The head mover 103 may include a Z-axis mover 103a that moves the laser head 102a in a direction along the Z axis, which is parallel to the vertical direction. The head mover 103 may include a Y-axis mover 103b that moves the laser head 102a in a direction along the Y axis, which is parallel to in the horizontal plane. The head mover 103 may include an X-axis mover 103c that moves the laser head 102a in a direction along the X axis, which is orthogonal to both the Z axis and the Y axis.

### (Pallet Mover 121b)

As in the example illustrated in FIG. 49, the laser beam machining system 100 may include the pallet mover 121b that moves a pallet (for example, the first pallet PT1) from a first region LR1 where the raw material workpiece RW is processed by the laser beam emitted from the laser head 102a to a second region LR2 accessible by the workpiece transfer hand 1. In the example illustrated in FIG. 49, the pallet mover 121b moves the first pallet PT1 in a direction parallel to the horizontal plane. In the example illustrated in FIG. 49, the pallet mover 121b moves the first pallet PT1 in a direction along the X axis, which is parallel to the horizontal plane.

### (Hand traveling device 11)

As in the example illustrated in FIG. 36, the hand traveling device 11 may include the multi-joint robot 11a. The hand traveling device 11 may also include the robot traveling device 11b, which moves the multi-joint robot 11a. In the example illustrated in FIG. 36, the robot traveling device 11b can move the multi-joint robot 11a in a direction along the X axis, which is parallel to the horizontal plane. Alternatively, as in the example illustrated in FIG. 14, the hand traveling device 11 may include a gate-shaped frame 11m that supports the workpiece transfer hand 1 and a mover (for example, the X-axis mover 113) that moves the gate-shaped frame 11m.

### (Attachment Supporter 15)

The laser beam machining system 100 may include the attachment supporter 15, which supports an attachment, out of the plurality of attachments 2, that has been detached from the plate 3. The attachment supporter 15 has already been described in embodiment 1 or embodiment 2, and the description on the attachment supporter 15 will be omitted.

### (First Platform 12, Second Platform 13a, Third Platform 13b)

The laser beam machining system 100 may include the first platform 12. The laser beam machining system 100 may include the second platform 13a and/or the third platform 13b. The first platform 12, the second platform 13a, and the third platform 13b have already been described in embodiment 1 or embodiment 2, and the description on these platforms will be omitted.

### (Power supply unit 6, Controller 7)

The laser beam machining system 100 may include the power supply unit 6 and/or the controller 7. The power supply unit 6 and the controller 7 have already been described in embodiment 2, and the description on the power supply unit 6 and the controller 7 will be omitted.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

### Description of the Reference Numerals

1, 1A, 1B ... Workpiece transfer hand, 2 ... Attachment, 2m ... Detached attachment, 3 ... Plate, 4 ... Plate supporter, 6 ... Power supply unit, 7 ... Controller, 10, 10A, 10B ... Workpiece transfer device, 11 ... Hand traveling device, 11a ... Multi-joint robot, 11b ... Robot traveling device, 11m ... Gate-shaped frame, 12 ... First platform, 13a ... Second platform, 13b ... Third platform, 13c ... Fourth platform, 15 ... Attachment supporter, 15a ... First supporter, 15b ... Second supporter, 21 ... First attachment, 21a ... First electromagnet, 21b ... Second electromagnet, 21c ... First support, 21e ... Spring, 21f ... Spring, 22 ... Second attachment, 22a ... Third electromagnet, 22b ... Fourth electromagnet, 22c ... Second support, 22e ... Spring, 22f ... Spring, 23 ... Third attachment, 23a ... Fifth electromagnet, 23b ... Sixth electromagnet, 24 ... Fourth attachment, 24a ... Seventh electromagnet, 24b ... Eighth electromagnet, 25 ... Fifth attachment, 25a ... Ninth electromagnet, 25b ... Tenth electromagnet, 26 ... Sixth attachment, 26a ... Eleventh electromagnet, 26b ... Twelfth electromagnet, 27 ... Seventh attachment, 27a ... Thirteenth electromagnet, 27b ... Fourteenth electromagnet, 28 ... Eighth attachment, 28a ... Fifteenth electromagnet, 28b ... Sixteenth electromagnet, 31 ... First main surface, 31a ... Attachment mounting surface, 33 ... Back surface, 41 ... Attachment portion, 42 ... Attachment plate, 56 ... Puller, 56m ... Motor, 70 ... Processor, 72 ... Memory, 74 ... Communication circuit, 76 ... Inputter, 76t ... Touch panel, 77 ... Display, 78 ... Bus, 100 ... Laser beam machining system, 101 ... Laser beam machining apparatus, 102 ... Laser irradiator, 102a ... Laser head, 103 ... Head mover, 103a ... Z-axis mover, 103b ... Y-axis mover, 103c ... X-axis mover, 106 ... Work supporter, 111 ... Z-axis mover, 112 ... Y-axis mover, 113 ... X-axis mover, 114 ... Rotator, 115a ... Leading end arm, 121 ... First support stand, 121b ... Pallet mover, 131a ... Second support stand, 131b ... Third support stand, 151 ... Gripping component, 151a ... First gripping component, 151b ... Second gripping component, 153 ... Gripping component mover, 153a ... First driver, 153b ... Second driver, 155 ... Stand, 157 ... Lifting device, 157a ... First lifting device, 157b ... Second lifting device, 210a ... Upper end portion, 210c ... First recess portion, 211a ... First surface, 211b ... Second surface, 211e ... First spring, 212e ... Second spring, 213c ... Fixing component, 213e ... Third spring, 214c ... First shaft component, 214e ... Fourth spring, 215c ... First hole part, 217c ... Fixing component, 218a ... First coil, 218b ... Second coil, 219a ... First yoke, 219b ... Second yoke, 220a ... Upper end portion, 220c ... Second recess portion, 221a ... Third surface, 221b ... Fourth surface, 221e ... Fifth spring, 222e ... Sixth spring, 223c ... Fixing component, 224c ... Second shaft component, 225c ... Second hole part, 227c ... Fixing component, 228a ... Third coil, 228b ... Fourth coil, 229a ... Third yoke, 229b ... Fourth yoke, 231a ... Fifth surface, 231b ... Sixth surface, 291a ... First cable, 291b ... Second cable, 292a ... Third cable, 292b ... Fourth cable, 293a ... Fifth cable, 293b ... Sixth cable, 294a ... Seventh cable, 294b ... Eighth cable, 295a ... Ninth cable, 295b ... Tenth cable, 296a ... Eleventh cable, 296b ... Twelfth cable, 297a ... Thirteenth cable, 297b ... Fourteenth cable, 298a ... Fifteenth cable, 298b ... Sixteenth cable, 311a ... Flat surface, 341h ... First through-hole part, 342h ... Second through-hole part, 421 ... First puller, 421m ... First motor, 422 ... Second puller, 422m ... Second motor, 510 ... Stationary electromagnet, 511 ... Cable, 530 ... Movable electromagnet, 532 ... Cable, 535 ... Electromagnet mover, 535s ... Fluid pressure cylinder, 1311a ... One side portion of second platform, 1312a ... Another side portion of second platform 13a, 2140c ... First fixing component, 2141c ... First bolt, 2146c ... First spacer, 2240c ... Second fixing component, 2241c ... Second bolt, 2246c ... Second spacer, AM ... Arm, AT1 ... Central axis of first hole part, AT2 ... Central axis of second hole part, AT3 ... Central axis of first attachment, AT4 ... Central axis of second attachment, BK ... Block, BK1 ... Third block, BK2 ... Fourth block, BL ... Block, BL1 ... First block, BL2 ... Second block, BT1 ... Bolt, C2 ... Central axis of plate supporter, DR1 ... First direction, DR2 ... Second direction, DT ... Data, G1 ... First gap, G2 ... Second gap, G3 ... Third gap, G4 ... Fourth gap, J ... Fragile region, JT ... joint, L1 ... Distance between upper surface of first electromagnet and lower surface of head of first bolt, LA1 ... First layout, LA2 ... Second layout, LA3 ... Third layout, LB ... Laser beam, LR1 ... First region, LR2 ... Second region, M1 ... Layout change mode, M1-1 ... First position change mode, M1-2 ... Second position change mode, M1-3 ... Third position change mode, M3 ... sorting mode, MT ... Motor, PD ... Subpart, PM ... Program, PT1 ... First pallet, PT2 ... Second pallet, PT3 ... Third pallet, Q1 ... Open position, Q2 ... Closed position, Q3 ... Lowered position, Q4 ... Raised position, Q5 ... Retracted position, Q6 ... Advanced position, RG1 ... Attachable region, RG2 ... Central region, RW ... Raw material workpiece, S1 ... Inner circumferential surface, S2 ... Inner circumferential surface, S3 ... Inner circumferential surface, S4 ... Inner circumferential surface, SL ... Slit, SP1 ... Inner space, SP2 ... Inner space, SR1 ... First sorting region, SR2 ... Second sorting region, T1 ... First attachment position, T2 ... Second attachment position, T3 ... Third attachment position, T4 ... Fourth attachment position, U1 ... Outer circumferential surface, U2 ... Outer circumferential surface, U3 ... Outer circumferential surface, U4 ... Outer circumferential surface, W ... Workpiece, W1 ... First workpiece, W2 ... Second workpiece, W3 ... Third workpiece, W4 ... Fourth workpiece, W5 ... Fifth workpiece, Wa ... Plate workpiece, Wb ... Plate workpiece, Wp ... Pipe workpiece, Ws ... Small workpiece, Wu ... Upper surface of workpiece, h1 ... First hole, h2 ... Second hole, h3 ... Third hole, h4 ... Fourth hole

## Claims

1. A workpiece transfer hand comprising:
a plurality of attachments including a first attachment capable of attracting a workpiece, and a second attachment capable of attracting the workpiece; and
a plate to which each of the plurality of attachments is attached by magnetic force,
wherein the first attachment includes
a first electromagnet that includes a first surface coming into contact with the workpiece and capable of attracting the workpiece, and
a second electromagnet that includes a second surface coming into contact with the plate and capable of attracting the plate, and
wherein the first electromagnet is tiltable with respect to the second electromagnet.

2. The workpiece transfer hand according to claim 1,
wherein the first attachment includes a first group of springs, and
wherein the first group of springs deform when the first electromagnet tilts with respect to the second electromagnet.

3. The workpiece transfer hand according to claim 1,
wherein the first attachment includes
a spring, and
a first fixing component that is disposed to pass through an inner space of the spring and is attached to the first electromagnet, and
wherein the spring deforms when the first electromagnet tilts with respect to the second electromagnet.

4. The workpiece transfer hand according to any one of claims 1 to 3,
wherein the first attachment includes a first support attached to the second electromagnet,
wherein the first support includes a first recess portion configured to receive an upper end portion of the first electromagnet, and
wherein a first gap enabling tilting of the first electromagnet is formed between an inner circumferential surface of the first recess portion and an outer circumferential surface of the upper end portion.

5. The workpiece transfer hand according to any one of claims 1 to 3,
wherein the first attachment includes a first support attached to the second electromagnet,
wherein the first support includes
a first shaft component to which the first electromagnet is attached, and
a first hole part through which the first shaft component passes, and
wherein a second gap enabling tilting of the first electromagnet is formed between an inner circumferential surface of the first hole part and an outer circumferential surface of the first shaft component.

6. The workpiece transfer hand according to claim 5, wherein the first shaft component is movable relative to the first hole part in a direction parallel to a central axis of the first hole part.

7. The workpiece transfer hand according to any one of claims 1 to 3,
wherein the first attachment includes a first support attached to the second electromagnet, and
wherein the first support includes
a first block configured to support the first electromagnet and disposed between the first electromagnet and the second electromagnet,
a second block configured to support the second electromagnet and disposed between the first block and the second electromagnet, and
a fixing component configured to fix the first block to the second block.

8. The workpiece transfer hand according to any one of claims 1 to 7,
wherein the second attachment includes
a third electromagnet that includes a third surface coming into contact with the workpiece and is capable of attracting the workpiece, and
a fourth electromagnet that includes a fourth surface coming into contact with the plate and is capable of attracting the plate, and
wherein the third electromagnet is tiltable with respect to the fourth electromagnet.

9. The workpiece transfer hand according to claim 8,
wherein a distance between the first electromagnet and the second electromagnet is variable, and
wherein a distance between the third electromagnet and the fourth electromagnet is variable.

10. The workpiece transfer hand according to any one of claims 1 to 9,
wherein the plurality of attachments are attachable to the plate in a first layout,
wherein the plurality of attachments are detachable from the plate, and
wherein the plurality of attachments are reattachable to the plate in a second layout different from the first layout.

11. A workpiece transfer device comprising:
a workpiece transfer hand; and
a hand traveling device configured to move the workpiece transfer hand,
wherein the workpiece transfer hand includes
a plurality of attachments including a first attachment capable of attracting a workpiece, and a second attachment capable of attracting the workpiece, and
a plate to which each of the plurality of attachments is attached by magnetic force,
wherein the first attachment includes
a first electromagnet that includes a first surface coming into contact with the workpiece and capable of attracting the workpiece, and
a second electromagnet that includes a second surface coming into contact with the plate and capable of attracting the plate, and
wherein the first electromagnet is tiltable with respect to the second electromagnet.

12. The workpiece transfer device according to claim 11, wherein the hand traveling device includes a multi-joint robot.

13. The workpiece transfer device according to claim 12, wherein the hand traveling device includes a robot traveling device configured to move the multi-joint robot entirely.

14. The workpiece transfer device according to any one of claims 11 to 13, further comprising a controller configured to control the hand traveling device,
wherein the controller is configured to control an attracting operation of the first attachment.

15. A laser beam machining system comprising:
a laser beam machining apparatus configured to irradiate a raw material workpiece with a laser beam to form a plurality of workpieces including a first workpiece and a second workpiece from the raw material workpiece; and
a workpiece transfer device configured to convey the plurality of workpieces,
wherein the workpiece transfer device includes
a workpiece transfer hand, and
a hand traveling device configured to move the workpiece transfer hand,
wherein the workpiece transfer hand includes
a plurality of attachments including a first attachment capable of attracting the first workpiece, and a second attachment capable of attracting the first workpiece, and
a plate to which each of the plurality of attachments is attached by magnetic force,
wherein the first attachment includes
a first electromagnet that includes a first surface coming into contact with the first workpiece and is capable of attracting the first workpiece, and
a second electromagnet that includes a second surface coming into contact with the plate and capable of attracting the plate, and
wherein the first electromagnet is tiltable with respect to the second electromagnet.
